(19) Europäisches Patentamt
European Patent Office
Office européen des brevets

(11) EP 3 134 457 B1

(12) **FASCICULE DE BREVET EUROPEEN**

(45) Date de publication et mention de la délivrance du brevet:
**07.10.2020 Bulletin 2020/41**

(21) Numéro de dépôt: **15725790.8**

(22) Date de dépôt: **23.04.2015**

(51) Int Cl.:
***C08G 59/42*** *(2006.01)* ***C08G 59/68*** *(2006.01)*

(86) Numéro de dépôt international:
**PCT/FR2015/051109**

(87) Numéro de publication internationale:
**WO 2015/162387 (29.10.2015 Gazette 2015/43)**

(54) **CATALYSEUR A BASE DE TITANE POUR RESINES VITRIMERES DE TYPE EPOXY/ANHYRIDE**

TITANBASIERTER KATALYSATOR FÜR EPOXID-/ANHYDRID-VITRIMERHARZE

TITANIUM-BASED CATALYST FOR VITRIMER RESINS OF EXPOXY/ANHYRIDE TYPE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.04.2014 FR 1453677**

(43) Date de publication de la demande:
**01.03.2017 Bulletin 2017/09**

(73) Titulaires:
- **Arkema France**
  **92700 Colombes (FR)**
- **Centre National de la Recherche Scientifique**
  **75794 Paris Cedex 16 (FR)**
- **Ecole Supérieure de Physique et de Chimie Industrielles de la Ville de Paris**
  **75005 Paris (FR)**

(72) Inventeurs:
- **DUQUENNE, Christophe**
  **75010 Paris (FR)**
- **MOUGNIER, Sébastien-Jun**
  **27300 Bernay (FR)**
- **TOURNILHAC, François-Genes**
  **75012 Paris (FR)**
- **LEIBLER, Ludwik**
  **75006 Paris (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**EP-A2- 0 758 662**
**EP-A2- 0 810 249**
**FR-A- 1 419 754**
**FR-A1- 2 584 412**
**GB-A- 1 069 439**
**US-A- 3 692 715**
**US-A- 4 137 275**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### DOMAINE DE L'INVENTION

La présente invention se rapporte à un complexe organométallique de titane répondant à la structure bis(3-phenoxy-1,2-propandioxyde) de titane (Ti(PPD)2) ainsi qu'à une composition renfermant, outre une résine thermodurcissable de type époxy et un durcisseur de type anhydride, au moins un catalyseur comprenant un complexe organométallique de titane. Cette composition permet la fabrication de résines vitrimères, c'est-à-dire de résines déformables à l'état thermodurci.

### ARRIERE-PLAN TECHNIQUE

Les résines thermodurcies (ou thermodurs) ont l'avantage de présenter une résistance mécanique, thermique et chimique élevée et pour cette raison peuvent remplacer les métaux dans certaines applications. Elles ont l'avantage d'être plus légères que les métaux. Elles peuvent aussi être employées comme matrices dans des matériaux composites, comme adhésifs, et comme revêtements. Parmi les polymères thermodurs, on peut citer les polyesters insaturés, les phénoplastes, les polyépoxydes, les polyuréthanes, les aminoplastes.

Les résines thermodurcissables classiques doivent être mises en œuvre, en particulier elles doivent être moulées de façon à obtenir d'emblée la forme adéquate pour l'utilisation finale. En effet, aucune transformation n'est plus possible une fois que la résine est polymérisée, hormis l'usinage qui reste souvent délicat. Les pièces souples ou dures et les composites à base de résines thermodurcissables ne sont ni transformables ni façonnables, elles ne peuvent pas être recyclées ni soudées.

Parallèlement aux résines thermodurcissables, une classe de matériaux polymères, les thermoplastiques, a été mise au point. Les thermoplastiques peuvent être mis en forme à haute température par moulage ou par injection mais ont des propriétés mécaniques et de résistance thermique et chimique moins intéressantes que celles des résines thermodurcies.

En outre, la mise en forme des thermoplastiques ne peut être réalisée que dans des gammes de température très étroites. En effet, lorsqu'ils sont chauffés, les thermoplastiques deviennent des liquides dont la fluidité varie abruptement au voisinage des températures de fusion et de transition vitreuse, ce qui ne permet pas de leur appliquer toute une variété de méthodes de transformation qui existent pour le verre et pour les métaux par exemple.

Dans ce contexte, les résines vitrimères ont été conçues dans le but d'allier à la fois les avantages des thermodurs et des thermoplastiques. Ces matériaux présentent à la fois les propriétés mécaniques et de résistance aux solvants des résines thermodurcies et la capacité à être refaçonnés et/ou réparés des matériaux thermoplastiques. Ces matériaux polymères qui sont capables de passer indéfiniment d'un état solide à un liquide viscoélastique, comme le verre, ont été désignés par "vitrimères". Contrairement aux thermoplastiques, la viscosité des vitrimères varie lentement avec la température, ce qui permet de les utiliser pour la fabrication d'objets ayant des formes particulières incompatibles avec un procédé de moulage, sans utiliser de moule ni contrôler précisément la température de mise en forme.

Les propriétés particulières des vitrimères sont liées à la capacité de leur réseau à se réorganiser au-delà d'une certaine température, sans modifier le nombre de liaisons intramoléculaires ni se dépolymériser, sous l'effet de réactions d'échange interne. Ces réactions entraînent une relaxation des contraintes au sein du matériau qui devient malléable, tout en conservant son intégrité et en restant insoluble dans tout solvant. Ces réactions sont rendues possibles par la présence d'un catalyseur. Dans le cas des vitrimères de type époxy-anhydride, il a été suggéré d'utiliser comme catalyseur un sel métallique de zinc, d'étain, de magnésium, de cobalt, de calcium, de titane ou de zirconium, de préférence l'acétylacétonate de zinc (WO 2012/101078). De même, différents catalyseurs ont été suggérés pour une utilisation dans des systèmes hybrides thermodurs/supramoléculaires obtenus à partir d'une résine thermodurcissable, d'un durcisseur de type anhydride ou de préférence de type acide et d'un composé comprenant un groupe associatif et une fonction permettant son greffage sur la résine thermodurcissable (WO 2012/152859). Ces catalyseurs peuvent être à base de différents métaux, dont le titane, et se présenter sous forme de différents sels, notamment d'alcoxydes (ou alcoolates) tels que l'isopropoxyde de titane, bien que l'acétylacétonate de zinc soit, là encore, préféré.

Des esters de l'acide titanique ou des esters polymères de l'acide titanique ont par ailleurs été proposés dans les documents FR 1419754 et GB 1069439 pour accélérer efficacement le durcissement par des anhydrides polycarboxyliques, de polyépoxydes cycloaliphatiques dans lesquels au moins un groupe époxyde se trouve dans un anneau à cinq chainons.

En outre, un système catalyseur de type aryloxy de titane, en particulier phénolate de titane, tel que le catécholate de titane a été suggéré, dans le document FR 2584412, pour faciliter la polymérisation de résines époxydes par voie anionique.

Or, les inventeurs ont démontré que les contraintes développées au sein des matériaux obtenus par exemple à partir d'acétylacétanoate de zinc étaient relaxées de manière moins complète et moins rapide qu'au sein de matériaux

préparés à partir de catalyseurs sous forme de complexe organométallique particulier de titane. Ces derniers présentent donc de meilleures propriétés de déformation, qui sont plus compatibles avec un procédé industriel de thermoformage, lequel requiert une déformation et une relaxation des contraintes très rapides. En outre, contrairement aux matériaux obtenus à partir d'autres catalyseurs de titane, cette aptitude à la déformation n'est pas obtenue au détriment de la densité de réticulation, et donc des propriétés mécaniques du matériau.

De plus, un autre inconvénient de l'acétylacétonate de zinc est le fait qu'aux températures (de 250 à 350°C) requises pour la transformation, ce catalyseur n'est pas suffisamment stable, ce qui provoque des dégagements gazeux lors des manipulations à chaud du matériau, se traduisant par une perte de masse mesurée notamment par analyse thermogravimétrique (ATG).

## RESUME DE L'INVENTION

### Définitions

Par résine « thermodurcissable », on entend un monomère, oligomère, prépolymère, polymère ou toute macromolécule apte à être réticulé chimiquement. On entend plus préférentiellement un monomère, oligomère, prépolymère, polymère ou toute macromolécule apte à être réticulé chimiquement lorsqu'il est mis à réagir avec un durcisseur (encore appelé réticulant) en présence d'une source d'énergie, par exemple de chaleur ou de rayonnement, et éventuellement d'un catalyseur.

Par résine « thermodurcie » ou « à l'état thermodurci », on entend une résine thermodurcissable réticulée chimiquement de sorte que son point de gel soit atteint ou dépassé. Par point de gel, on entend le degré de réticulation à partir duquel la résine n'est quasiment plus soluble dans les solvants. Toute méthode classiquement utilisée par l'homme du métier pourra être mise en œuvre pour le vérifier. On pourra par exemple mettre en œuvre le test décrit dans la demande WO 97/23516 page 20. Une résine est considérée comme thermodurcie au sens de l'invention dès lors que son taux de gel, c'est-à-dire le pourcentage de sa masse résiduelle après mise en solvant relativement à sa masse initiale avant mise en solvant, est égal ou supérieur à 75 %.

Le terme « durcisseur » désigne un agent réticulant apte à réticuler une résine thermodurcissable. Il s'agit ici d'un composé généralement polyfonctionnel, porteur de fonctions anhydrides réactives capables de réagir avec des fonctions réactives portées par la résine.

Lorsqu'il est fait référence à des intervalles, les expressions du type « allant de ... à ... » incluent les bornes de l'intervalle. Les expressions du type « compris entre ... et ... » excluent les bornes de l'intervalle.

L'invention a pour premier objet le composé bis(3-phenoxy-1,2-propandioxyde) de titane, désigné ici par "$Ti(PPD)_2$", qui est un complexe organométallique de titane particulier, et sur son utilisation comme catalyseur d'effet vitrimère dans des systèmes à base de résine époxy et de durcisseur de type anhydride.

L'invention a pour second objet une composition comprenant au moins :

- un catalyseur comprenant, et de préférence constitué par, un complexe organométallique de titane,
- une résine thermodurcissable comprenant au moins une et avantageusement plusieurs fonctions époxyde et optionnellement au moins une et avantageusement plusieurs fonctions hydroxyle libre et/ou ester, et un durcisseur de résine thermodurcissable choisi parmi les anhydrides d'acide carboxylique.

La résine thermodurcissable dans la composition selon l'invention est choisie dans la famille des glycidyle esters, glycidyle éthers, glycidyle aminés, glycidyle isocyanurates, comprenant au moins deux groupes glycidyle par molécule, ou parmi les composés oléfiniques époxydés linéaires, ramifiés ou cycliques à plus de six chaînons.

Le catalyseur ci-dessus pourra être désigné dans la suite de la description par "catalyseur d'effet vitrimère". Le catalyseur d'effet vitrimère facilite les réactions d'échange interne au sein d'une résine thermodurcie de façon à la rendre déformable.

Il est entendu que le catalyseur ci-dessus est présent, dans la composition de l'invention, en plus des catalyseurs susceptibles d'être déjà présents de façon intrinsèque dans la résine thermodurcissable et/ou dans le durcisseur, du fait de leur préparation pouvant être réalisée en présence de catalyseurs en faible teneur, et en plus des catalyseurs classiques de durcissement de résines époxydes par des anhydrides, éventuellement présents.

Il est entendu que la composition ne comprend pas de composé comportant un groupement associatif et une fonction permettant son greffage sur la résine thermodurcissable.

Il est entendu que la composition de l'invention ne comprend pas de résine thermodurcissable de type polyépoxyde cyclo-aliphatique présentant au moins un groupe 1,2-époxyde se trouvant dans un anneau à cinq chainons.

Un autre objet de l'invention est une composition comprenant au moins une résine thermodurcissable choisie dans la famille des glycidyle esters, glycidyle éthers, glycidyle aminés, glycidyle isocyanurates, comprenant au moins deux groupes glycidyle par molécule, ou parmi les composés oléfiniques époxydés linéaires, ramifiés ou cycliques à

plus de six chaînons, au moins un anhydride d'acide carboxylique, et au moins le bis(3-phenoxy-1,2-propandioxyde) de titane $Ti(PPD)_2$.

Un autre objet de l'invention est une composition comprenant au moins une résine thermodurcissable choisie parmi le bisphénol A diglycidyl éther (DGEBA), la tétraglycidyl méthylène dianiline (TGMDA), les résines Novolac, et le (glycidyle-méthacrylate), de préférence au moins un diglycidyl éther de bisphénol A, et au moins un anhydride d'acide carboxylique, et au moins le bis(3-phenoxy-1,2-propandioxyde) de titane $Ti(PPD)_2$.

L'invention a également pour objet un kit pour la fabrication d'une composition selon l'invention, comportant au moins :

- une première composition comprenant le catalyseur, seul ou avec le durcisseur ou la résine thermodurcissable ;
- éventuellement une deuxième composition comprenant le durcisseur ;
- éventuellement une troisième composition comprenant la résine thermodurcissable.

Elle a en outre pour objet l'utilisation de la composition précitée pour la fabrication d'un objet en résine thermodurcie déformable à chaud, ainsi qu'un objet comprenant une résine thermodurcie obtenue à partir de la composition selon l'invention.

L'invention a encore pour objet un procédé de déformation d'un objet tel que défini ci-dessus, tel qu'un procédé d'assemblage, de soudage, de réparation ou de recyclage, comprenant l'application à cet objet d'une contrainte mécanique à une température (T) supérieure à la température de transition vitreuse Tg de la résine thermodurcie.

Elle a enfin pour objet l'utilisation d'un ou plusieurs objets tels que décrits ci-dessus dans les domaines de l'automobile, l'aéronautique, le nautisme, l'aérospatiale, le sport, le bâtiment, l'électrique, l'isolation électrique, l'électronique, l'éolien, l'emballage, l'imprimerie.

<u>DESCRIPTION DETAILLEE</u>

Comme indiqué précédemment, la composition selon l'invention renferme un catalyseur comprenant un complexe organométallique de titane, de préférence un alcoolate de titane.

Des exemples d'alcoolates de titane sont le propoxyde de titane, l'isopropoxyde de titane, le butoxyde de titane et les composés résultant de la réaction de ces alcoolates avec des glycols, tels que les composés obtenus selon la réaction suivante :

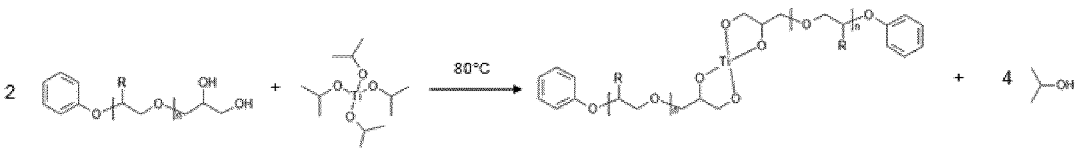


Avec R = H, méthyle
n allant de 0 à 100

sans que cette liste ne soit limitative.

Un complexe organométallique de titane particulièrement avantageux comme catalyseur d'effet vitrimère pour la composition selon l'invention est le composé bis(3-phenoxy-1,2-propandioxyde) de titane, désigné ici par "$Ti(PPD)_2$", obtenu avec n =0, selon la réaction suivante :

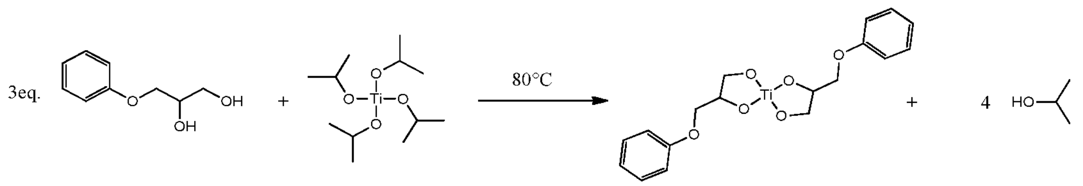


On préfère utiliser comme alcoolate de titane, l'isopropoxyde de titane $Ti(iPr)_4$ ou le Phenoxypropanediol de titane $Ti(PPD)_2$ comme illustré dans la réaction précédente.

Selon une forme préférée de l'invention, le complexe de titane comporte au moins un ligand chélatant tel que décrit.

Le catalyseur de type complexe organométallique de titane comportant au moins un ligand chélatant peut être également un carboxylate de titane dérivé d'au moins un acide carboxylique de formule R'COOH avec R' désignant

une chaine alkyle linéaire ou ramifiée, saturée ou insaturée, comportant de 1 à 24 atomes de carbone.

Comme exemples d'acides carboxyliques, on peut citer les acides gras issus de l'hydrolyse des huiles végétales, l'acide 2-éthylhexanoique, l'acide benzoique et ses dérivés substitués, l'acide salicylique, l'acide ricinoléique, l'acide 12-hydroxystéarique, l'acide lactique, l'acide glycolique, l'acide acrylique et l'acide méthacrylique. Les acides phtalique, oxalique ou succinique peuvent convenir aussi.

Le catalyseur de type complexe organométallique de titane comportant au moins un ligand chélatant peut être également choisi parmi les dicétones de titane tels que l'acétyl acétonate de titane.

Selon un mode de réalisation de l'invention, le catalyseur de type complexe organométallique de titane est insoluble dans la résine thermodurcissable et devient soluble dans le système résine époxy/anhydride.

Selon un mode de réalisation de l'invention, le catalyseur de type complexe organométallique de titane n'amorce pas, à lui seul la polymérisation anionique de la résine thermodurcissable. Cette caractéristique est particulièrement avantageuse pour les résines vitrimères pour lesquelles la polymérisation anionique par ouverture de cycle (ROP) n'est pas souhaitée puisqu'elle génère des liaisons chimiques de type éther qui ne sont pas échangeables par transestérification.

Selon un mode de réalisation préféré de l'invention, le catalyseur est le bis(3-phenoxy-1,2-propandioxyde) de titane.

Selon un mode de réalisation de l'invention, le catalyseur représente de 1 à 50% en mol, de préférence de 2 à 25% en mol, plus préférentiellement de 5 à 20% en mol, mieux, de 10 à 15% en mol, relativement à la quantité molaire de fonctions époxy dans ladite résine thermodurcissable.

La composition selon l'invention comprend en outre au moins un durcisseur de type anhydride d'acide carboxylique (comportant au moins une fonction -C(O)-O-C(O)-).

Le nombre de moles d'atomes de titane peut aller de 1 à 50 %, de préférence de 2 à 25%, de préférence de 5 à 20 %, relativement au nombre de moles de fonctions anhydride du durcisseur.

On peut notamment citer comme durcisseurs de type anhydride les anhydrides cycliques, comme par exemple l'anhydride phtalique, l'anhydride nadique ou méthylnadique, l'anhydride dodécénylsuccinique (DDSA), l'anhydride glutarique; les anhydrides aromatiques partiellement ou totalement hydrogénés comme l'anhydride tétrahydrophtalique, ou méthyltétrahydrophtalique, l'anhydride hexahydrophtalique ou méthylhexahydrophtalique; et leurs mélanges.

On peut encore citer comme durcisseurs de type anhydride, l'anhydride succinique, l'anhydride maléique, l'anhydride trimellitique, l'adduit d'anhydride trimellitique et d'éthylèneglycol, l'anhydride chlorendique, l'anhydride tétrachlorophtalique, le dianhydride pyromellitique (PMDA), le dianhydride d'acide 1,2,3,4 cyclopentanetétracarboxylique, les polyanhydrides d'acides aliphatiques tels que le polyanhydride polyazélaique, le polyanhydride polysébacique et leurs mélanges.

On peut notamment utiliser les anhydrides de formules suivantes, et leurs mélanges :

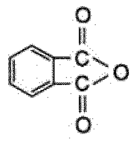

PA

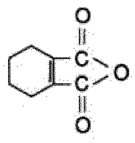

THPA

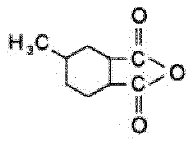

MHHPA

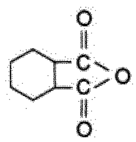

HHPA

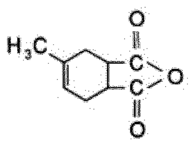

MTHPA

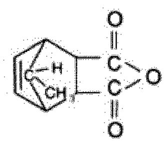

MNA

et plus préférentiellement le MTHPA.

On peut encore citer comme durcisseur de type anhydride le durcisseur de référence commerciale HY905 vendu par Hunstman, qui et un mélange liquide de plusieurs anhydrides.

Avantageusement, la quantité de durcisseur est telle que le nombre de moles de fonctions époxydes de la résine peut aller de 50 à 300%, de préférence de 100% à 200%, de préférence de 125 à 150 %, relativement au nombre de moles de fonctions anhydride du durcisseur.

La composition selon l'invention comprend également au moins une résine thermodurcissable comportant au moins une et avantageusement au moins plusieurs fonctions époxyde et optionnellement au moins une et avantageusement plusieurs fonctions hydroxyles libres et/ou fonctions ester, choisie dans la famille des glycidyle esters, glycidyle éthers, glycidyle aminés, glycidyle isocyanurates, comprenant au moins deux groupes glycidyle par molécule, ou parmi

les composés oléfiniques époxydés linéaires, ramifiés ou cycliques à plus de six chaînons.

On désignera une telle résine par « résine époxy ».

La résine thermodurcissable selon l'invention est choisie en particulier de façon à permettre après durcissement d'atteindre une température de transition vitreuse (Tg) comprise entre 60 et 170°C, de préférence entre 80 et 150°C, plus préférentiellement entre 100 et 140°C.

De façon avantageuse, la résine époxy représente au moins 10 % en poids, au moins 20 % en poids, au moins 40 % en poids, au moins 60 % en poids, voire 100% en poids, du poids total de résine thermodurcissable présente dans la composition.

Il existe deux grandes catégories de résines époxy : les résines époxy de type glycidyle, et les résines époxy de type non glycidyle. Les résines époxy de type glycidyle sont elles-mêmes classées en glycidyle éther, glycidyle ester et glycidyle amine. Les résines époxy non glycidyle sont de type aliphatique ou cycloaliphatique.

Les résines époxy glycidyle sont préparées par une réaction de condensation d'un diol, diacide ou diamine avec de l'épichlorhydrine. Les résine époxy non glycidyle sont formées par peroxydation des doubles liaisons oléfiniques d'un polymère.

Parmi les éthers époxy glycidyle, le diglycidyl éther de bisphénol A (DGEBA) représenté ci-dessous est le plus couramment utilisé.

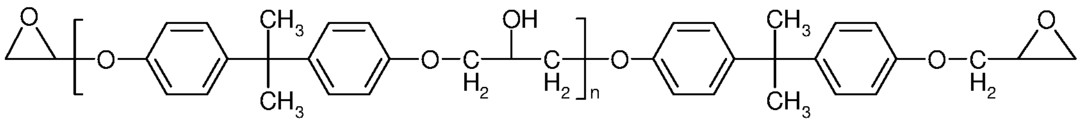

Les résines à base de DGEBA ont d'excellentes propriétés électriques, un faible retrait, une bonne adhérence sur de nombreux métaux et une bonne résistance à l'humidité, aux chocs mécaniques et une bonne résistance thermique.

Les propriétés des résines DGEBA dépendent de la valeur du degré de polymérisation n, qui lui-même dépend de la stœchiométrie de la réaction de synthèse. En règle générale, n varie de 0 à 25.

Les résines époxy Novolac (dont la formule est représentée ci-dessous) sont des glycidyléthers de résines phénoliques novolaques. Elles sont obtenues par réaction du phénol avec le formaldéhyde en présence d'un catalyseur acide pour produire une résine phénolique novolaque, suivie d'une réaction avec l'épichlorhydrine en présence d'hydroxyde de sodium comme catalyseur.

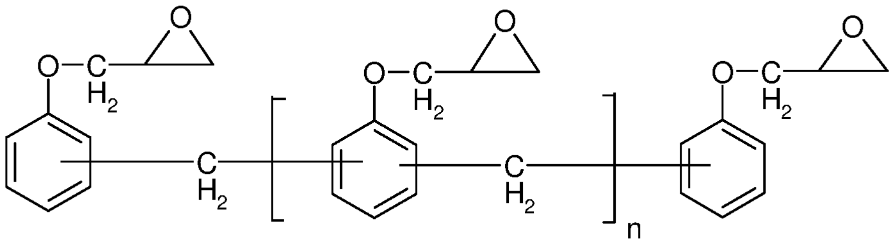

Les résines époxy Novolac contiennent généralement plusieurs groupes époxyde. Les multiples groupes époxyde permettent de réaliser des résines thermodurcies de haute densité de réticulation. Les résines époxy Novolac sont largement utilisées pour fabriquer des matériaux pour la microélectronique en raison de leur résistance supérieure à une température élevée, de leur excellente aptitude au moulage, et de leurs propriétés supérieures mécaniques, électriques, de résistance à la chaleur et à l'humidité.

La résine thermodurcissable utilisable dans la présente invention peut par exemple être choisie dans la famille des glycidyle esters, glycidyle éthers, glycidyle amines, glycidyle isocyanurates, comprenant au moins deux groupes glycidyle par molécule, qui comprend sans que cette liste ne soit exhaustive, les résines époxy Novolac, le bisphénol A diglycidyl éther (DGEBA), le bisphénol A diglycidyl éther hydrogéné, le bisphénol F diglycidyl éther, la tétraglycidyl méthylène dianiline (TGMDA), le pentaérythritol tétraglycidyl éther, le triméthylol triglycidyl ether (TMPTGE), le tétrabromo bisphénol A diglycidyl éther, ou les hydroquinone diglycidyl éther, l'éthylène glycol diglycidyl éther, le propylène glycol diglycidyl éther, le butylène glycol diglycidyl éther, le néopentyl glycol diglycidyl éther, le 1,4-butanediol diglycidyl éther, le 1,6-hexanediol diglycidyl éther, le cyclohexanediméthanol diglycidyl éther, le polyéthylène glycol diglycidyl éther, le polypropylène glycol diglycidyl éther, le polytétraméthylène glycol diglycidyl éther, le résorcinol diglycidyl éther, le néopentylglycol diglycidyl éther, le bisphénol A polyéthylène glycol diglycidyl éther, le bisphénol A polypropylèneglycol diglycidyl éther, le diglycidyl ester d'acide phtalique, isopthalique ou téréphtalique, le poly(glycidyle-acrylate), le poly(glycidyle-méthacrylate), les glycidyl esters de l'acide versatique encore appelés diglycidyl ester de dimères d'acides tels que ceux commercialisés sous la dénomination CARDURA® E8, E10 ou E12 par la société Momentive (CARDURA®

E10 de CAS 26761-45-5), le polyglycidyl éther d'huile de ricin, le triglycidyl isocyanurate (TGIC), et leurs mélanges.

La résine thermodurcissable utilisable dans la présente invention peut aussi être choisie parmi les composés oléfiniques époxydés linéaires, ramifiés ou cycliques à plus de six chaînons comprenant, sans que cette liste ne soit exhaustive, les acides gras polyinsaturés époxydés, les huiles végétales époxydées notamment l'huile de soja époxydée, les huiles de poissons époxydées, et le limonène époxydé; les résines cycloaliphatiques époxydées commercialisées sous la dénomination ARALDITE® CY179, CY184, MY0510 et MY720 par la société BASF, les résines CY179 et la CY184 répondant respectivement aux formules suivantes :

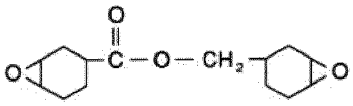 (I) 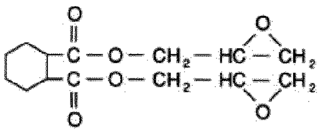 (II) ;

La résine thermodurcissable utilisable dans la présente invention peut aussi être choisie parmi les composés monoépoxydes tels que le glycidyl méthacrylate, les glycidyl (méth)acrylates alkoxylés ; les C8-C10 alkyl glycidyl éthers, les C12-C14 alkyl glycidyl ethers, le glycidyl ester d'acide néodecanoïque, le butyl glycidyl éther, le crésyl glycidyl éther, le phényl glycidyl éther, le p-nonyphényl glycidyl éther, le p-nonylphényl glycidyl éther, le p-t-butyl phényl glycidyl éther, le 2-éthylhexyl glycidyl éther, et leurs mélanges.

La composition selon l'invention peut comprendre un mélange des résines époxy précitées.

Selon un mode de réalisation de l'invention, la résine thermodurcissable est choisie dans la famille des glycidyle esters, glycidyle éthers, glycidyle amines, glycidyle isocyanurates, comprenant au moins deux groupes glycidyle par molécule.

Selon un mode de réalisation de l'invention, la résine thermodurcissable est choisie dans la famille des les composés oléfiniques époxydés linéaires, ramifiés ou cycliques à plus de six chaînons.

Selon un mode de réalisation préféré de l'invention, la résine thermodurcissable est choisie parmi : le DGEBA, la TGMDA, le bisphénol F diglycidyl éther, les résines Novolac, le TMPTGE, le diglycidyl ester d'acide phtalique, isopthalique ou téréphtalique, le tétrabromo bisphénol A diglycidyl éther, le 1,4-butanediol diglycidyl éther, l'ARALDITE®CY184 de formule (II) ci-dessus, le TGIC, le poly(glycidyle-méthacrylate) et leurs mélanges.

Selon un mode de réalisation préféré de l'invention, il s'agit du DGEBA de la TGMDA, des résines Novolac, du (glycidyle-méthacrylate).

Selon un mode de réalisation, la composition est constituée par, le catalyseur, le durcisseur et une résine thermodurcissable époxy, tels que définis plus haut. Selon ce mode de réalisation, le nombre de moles d'atomes de titane peut aller de 1 à 50 %, de préférence de 2 à 25%, de préférence de 5 à 20 %, relativement au nombre de moles de fonctions anhydride. Le nombre de moles de fonctions époxydes de la résine peut aller de 50 à 300%, de préférence de 100% à 200%, de préférence de 125 à 150 %, relativement au nombre de moles de fonctions anhydride du durcisseur.

La composition de l'invention peut éventuellement comprendre un ou plusieurs composés additionnels, dans la mesure où leur présence n'altère pas les propriétés avantageuses qui découlent de l'invention. Des exemples de tels composés additionnels sont : des polymères, des pigments, des colorants, des charges, des plastifiants, des fibres longues ou courtes, tissées ou non, des agents retardateurs de flamme, des agents antioxydants, des lubrifiants, du bois, du verre, des métaux et leurs mélanges.

Avantageusement, la teneur en résine thermodurcissable et en durcisseur va de 10% à 90 % en poids, notamment de 20 % à 80 % en poids voire de 30 à 70 % en poids, relativement au poids total de la composition, le complément à 100 % étant apporté par le catalyseur et éventuellement par des composés additionnels choisis parmi les composés précités.

Parmi les polymères qui peuvent être employés en mélange avec la composition de l'invention, on peut mentionner : des élastomères, des thermoplastiques, des élastomères thermoplastiques, des additifs chocs.

Par pigments, on entend des particules colorées insolubles dans la composition de l'invention. Comme pigments utilisables selon l'invention, on peut citer l'oxyde de titane, le noir de carbone, les nanotubes de carbone, les particules métalliques, la silice, les oxydes métalliques, les sulfures métalliques ou tout autre pigment minéral, on peut également citer les phtalocyanines, les anthraquinones, les quinacridones, les dioxazines, les pigments azoïques ou tout autre pigment organique, les pigments naturels (garance, indigo, pourpre, cochenille, etc) et les mélanges de pigments.

Par colorants, on entend des molécules solubles dans la composition de l'invention et ayant la capacité d'absorber une partie du rayonnement visible.

Parmi les charges qui peuvent être employées dans la composition de l'invention, on peut mentionner les charges classiquement utilisées dans les formulations de polymères. On peut citer sans que cela soit limitatif : la silice, les argiles, le noir de carbone, le kaolin, le talc, le carbonate de calcium, les whiskers et leurs mélanges.

Parmi les fibres qui peuvent être employées dans la composition de l'invention, on peut mentionner : des fibres

de verre, des fibres de carbone, des fibres polyester, des fibres polyamides, des fibres aramides, des fibres cellulosiques et nanocellulosiques ou encore des fibres végétales (lin, chanvre, sisal, bambou...) et leurs mélanges.

La présence, dans la composition de l'invention, de pigments, de colorants ou de fibres capables d'absorber le rayonnement, ou leurs mélanges, peut servir à assurer le chauffage d'un matériau ou d'un objet fabriqué à partir d'une telle composition, au moyen d'une source de rayonnement telle qu'un laser.

La présence, dans la composition de l'invention, de pigments, de fibres ou de charges conductrices de l'électricité tels que noir de carbone, nanotubes de carbone, fibres de carbone, poudres métalliques, particules magnétiques ou leurs mélanges, peut être utilisée pour assurer le chauffage d'un matériau ou d'un objet fabriqué à partir d'une telle composition, par effet Joule, par induction ou par micro-ondes. Un tel chauffage peut permettre la mise en œuvre d'un procédé de fabrication, de transformation ou de recyclage d'un matériau ou d'un objet suivant un procédé qui sera décrit plus loin.

Les composés additionnels peuvent aussi être choisis parmi un ou plusieurs autres catalyseurs et/ou durcisseurs, de toutes natures connues de l'homme du métier comme jouant ces rôles dans la mesure ou ils n'altèrent pas les propriétés avantageuses découlant de l'invention. Ils seront désignés par « catalyseur supplémentaire » et « durcisseur supplémentaire ».

Selon une forme d'exécution préférée de l'invention, la composition décrite ici renferme en outre un ou plusieurs catalyseurs supplémentaires qui sont spécifiques de l'ouverture d'époxyde, telles que :

- les amines tertiaires, éventuellement bloquées, comme par exemple: le 2,4,6-tris(diméthylaminométhyl)phénol (par exemple commercialisée sous le nom Ancamine), o-(diméthylaminométhyl) phénol, la benzyldiméthylamine (BDMA), le 1,4-diazabicyclo(2,2,2)octane (DABCO), le chlorure de méthyltribenzyl ammonium.
- les imidazoles, comme les 2-méthylimidazole (2-MI), 2-phénylimidazole (2-PI), 2-éthyl-4-méthyl-imidazole (EMI), 1-propylimidazole, chlorure de 1-éthyl-3-méthylimidazolium, 1-(2-hydroxypropyl)imidazole.
- les phosphoniums : les halogénures de tetraalkyl et alkyltriphénylphosphonium.
- les sels d'amine de polyacides, les condensats aniline-formaldéhyde, les N,N-alcanolamines, les borates de trialcanolamines, les fluoroborates comme la monoéthylamine de trifluorure de bore (BF3-MEA), les phosphines organosubstituées, les sels de monoimidazoline quaternaire, des mercaptans, des polysulfures.
- et leurs mélanges.

Préférentiellement, le catalyseur d'ouverture d'époxyde est choisi parmi : les amines tertiaires, les imidazoles, et leurs mélanges.

Les amines (hétéro)aromatiques telles que la 2-méthylimidazole et le tris(diméthylaminométhyl)phénol sont plus particulièrement préférées comme catalyseur d'ouverture d'époxyde pour une utilisation dans cette invention.

Ce catalyseur supplémentaire d'ouverture d'époxyde est avantageusement mis en œuvre dans la composition à raison de 0,1% à 5% molaire par rapport au nombre de moles de fonctions époxydes portées par la résine thermodurcissable.

On peut aussi mettre en œuvre un ou plusieurs catalyseurs supplémentaires d'effet vitrimère choisis parmi les catalyseurs cités dans les demandes WO2011/151584, WO2012/101078 et WO 2012/152859, toujours dans la mesure ou leur présence n'altère pas les propriétés avantageuses découlant de l'invention.

Le catalyseur supplémentaire d'effet vitrimère peut par exemple être présent dans la composition de l'invention à raison de 0,1 à 10 % en poids et de préférence de 0,1 à 5 % en poids relativement au poids total de la composition.

Par ailleurs, l'utilisation d'un durcisseur supplémentaire permet d'obtenir, pour les matériaux fabriqués *in fine,* une large gamme de propriétés mécaniques à la température ambiante (par exemple contrôle de la température de transition vitreuse et/ou du module d'une résine thermodurcie).

Comme exemples de durcisseurs supplémentaires, on peut mentionner les durcisseurs de résine époxy, en particulier ceux choisis parmi les amines, les polyamides, les acides polycarboxyliques, les résines phénoliques, les anhydrides (éventuellement autres que ceux décrits ci-dessus comme durcisseurs acides), les isocyanates, les polymercaptans, les dicyanodiamides et leurs mélanges.

En particulier, un durcisseur supplémentaire de type amine peut être choisi parmi les amines primaires ou secondaires ayant au moins une fonction $-NH_2$ ou deux fonctions -NH et de 2 à 40 atomes de carbone. Ces amines peuvent par exemple être choisies parmi les amines aliphatiques telles que la diéthylène triamine, la triéthylène tétramine, la tétraéthylène pentamine, la dihexylène triamine, la cadavérine, la putrescine, l'hexanediamine, la spermine, l'isophorone diamine, ainsi que les amines aromatiques telles que la phénylène diamine, le diamino diphénylméthane, la diamino diphénylsulfone, la méthylène bischlorodiéthylaniline, la meta-xylylène diamine (MXDA) et ses dérivés hydrogénés tels que le 1,3-bis(aminométhyl cyclohexane) (1,3-BAC) ; et leurs mélanges.

Un durcisseur supplémentaire de type amine peut encore être choisi parmi les polyetheramines, par exemple les JEFFAMINES de Huntsman, éventuellement en mélanges avec d'autres durcisseurs supplémentaires.

Comme durcisseurs supplémentaires préférés, on peut citer la diéthylène triamine, la triéthylène tétramine,

l'hexanediamine, et leurs mélanges.

Selon une forme d'exécution préférée de l'invention, la composition décrite ici renferme en outre au moins un polyol, c'est-à-dire un composé comportant au moins deux fonctions hydroxyle, en particulier un polyhydroxyalcane linéaire ou ramifié, tel que le glycérol, le triméthylolpropane ou le pentaérythritol, de préférence le glycérol. Il a en effet été observé que l'ajout de ce composé au mélange réactionnel permettait d'améliorer encore les propriétés vitrimères du matériau, c'est-à-dire d'obtenir un matériau capable de relaxer plus complètement et plus rapidement les contraintes après application d'une déformation.

Procédé de préparation de la composition

Les composés de la composition selon l'invention sont soit disponibles commercialement, soit facilement synthétisables par l'homme du métier à partir de matières premières disponibles commercialement.

La composition de l'invention peut être obtenue par simple mise en contact des composés qu'elle renferme. Cette mise en contact est de préférence effectuée à une température allant de 15°C à 130°C, notamment de 50°C à 125°C. La mise en contact peut être effectuée avec ou sans moyen d'homogénéisation.

Selon un mode de réalisation particulier, le procédé comprend une première étape au cours de laquelle le catalyseur est préintroduit dans la résine ou le durcisseur, de préférence dans le durcisseur. Le catalyseur peut être alors sous forme de dispersion s'il s'agit d'une poudre, ou d'une solution. Cette dispersion ou mise en solution peut être effectuée à température ambiante ou à chaud pour obtenir les caractéristiques de viscosité souhaitées.

Selon un autre mode de réalisation particulier, le procédé comprend une première étape de formation d'une espèce activée, comprenant la mise en contact du durcisseur ou de la résine thermodurcissable avec le catalyseur, de sorte à complexer l'atome de titane du catalyseur dans le durcisseur ou la résine thermodurcissable.

Kits

La composition conforme à l'invention peut être préparée à partir d'un kit comportant au moins :

- une première composition comprenant le catalyseur, seul, ou avec le durcisseur ou la résine thermodurcissable ;
- éventuellement une deuxième composition comprenant le durcisseur ;
- éventuellement une troisième composition comprenant la résine thermodurcissable.

Il est également possible de prévoir un kit pour la fabrication d'un objet conforme à l'invention, comportant au moins :

- une première composition comprenant le catalyseur, seul, ou avec le durcisseur ou la résine thermodurcissable ;
- éventuellement une deuxième composition comprenant le durcisseur,
- éventuellement une troisième composition comprenant la résine thermodurcissable

Les différentes compositions peuvent être stockées ensemble ou séparément. Il est aussi possible de stocker ensemble certaines des compositions tout en les maintenant séparées des autres compositions.

Les différentes compositions sont stockées généralement à température ambiante.

De préférence, lorsque les deuxième et troisième compositions sont toutes deux présentes dans le kit, elles sont dans un conditionnement adapté pour empêcher qu'une réaction de réticulation entre la résine thermodurcissable et le durcisseur ne se produise sans intervention d'un opérateur.

Le conditionnement peut consister en un récipient comportant deux voire trois compartiments internes permettant le stockage séparé de chacune des compositions. Selon une variante, le kit peut consister en un seul et unique récipient, contenant un mélange en quantités appropriées des deux ou trois compositions. Dans ce dernier cas, l'intervention de l'opérateur se limite avantageusement à un chauffage.

Il peut être prévu un moyen permettant la mise en contact des contenus des différents compartiments, avantageusement de façon à permettre d'initier la réticulation dans le récipient.

On peut aussi prévoir un kit consistant en plusieurs flacons distincts associés dans un même emballage et comportant chacun les quantités adaptées de chacune des compositions pour la préparation de la composition de l'invention, de façon à éviter à l'utilisateur des opérations de pesée et/ou de dosage.

Utilisations

La composition décrite précédemment peut être utilisée pour la fabrication d'un objet en résine thermodurcie déformable à chaud.

Lorsque les composants de la présente invention sont mélangés, on pense, sans vouloir être liés par cette théorie, que le catalyseur ouvre le cycle anhydride du durcisseur pour former un monoester et un acide carboxylique qui, par la suite, ouvre le cycle époxyde de la résine thermodurcissable pour former un diester et un groupe hydroxyle libre. La résine thermodurcie obtenue à partir de la composition selon l'invention est déformable à chaud.
Par déformable « à chaud », on entend à une température (T) supérieure à la température de transition vitreuse Tg de la résine thermodurcie.
La résine thermodurcie obtenue à partir de la composition selon l'invention présente avantageusement :

- une température de transition vitreuse (Tg) comprise entre 60 et 170°C, de préférence entre 80 et 150°C, plus préférentiellement entre 100 et 140°C.
- un temps de relaxation τ nécessaire pour obtenir une valeur de contrainte normalisée égale à 1/e à une température égale à Tg + 100°C et/ou à 200°C, qui est inférieur à 5000 secondes, de préférence inférieur à 2000 secondes, plus préférentiellement inférieur à 1000 secondes voire inférieur à 500 secondes,
- un pourcentage de contraintes relaxées au bout de 5000 secondes à une température égale à Tg + 100°C et/ou à 200°C, qui est d'au moins 80%, de préférence d'au moins 90%, plus préférentiellement d'au moins 95%, voire de 100%,
- un module de conservation (G') au plateau caoutchoutique, par exemple à une température comprise entre 150 et 200°C, supérieur à 5 MPa, de préférence supérieur ou égal à 10 MPa, voire supérieur ou égal à 15 MPa,

Ces grandeurs sont mesurées suivant les protocoles indiqués dans les exemples ci-après.

Objets et leurs procédés de fabrication

L'invention porte également sur un objet comprenant une résine thermodurcie obtenue à partir d'au moins une composition conforme à l'invention.
Par « objet », on entend au sens de la présente invention, une pièce en trois dimensions. On inclut dans cette définition les revêtements, les films, les feuilles, les rubans, etc. Les objets selon l'invention peuvent notamment consister en des revêtements déposés sur un support, comme une couche de protection, une peinture ou encore un film adhésif. On inclut également les poudres, les granulés, etc...
L'objet selon l'invention peut être fabriqué suivant un procédé de fabrication comprenant :

a) la préparation ou la mise à disposition d'une composition conforme à l'invention,
b) la mise en forme de la composition issue de l'étape a)
c) l'application d'une énergie permettant le durcissement de la résine,
d) le refroidissement de la résine thermodurcie.

Les étapes a) b) c) du procédé peuvent être successives ou simultanées.
La préparation de la composition peut se faire dans un mélangeur de tout type connu de l'homme du métier. Elle peut notamment se faire par mise en contact des compositions décrites en relation avec le kit de manière à former une composition selon l'invention.
La mise en forme peut être effectuée par toute technique connue de l'homme du métier dans le domaine des résines thermodurcissables, notamment par moulage. Notablement, l'invention permet de prévoir également d'autres modes de mise en forme tels que le coulage, l'enroulement filamentaire, le moulage en continu ou entre pellicules, l'infusion, la pultrusion, le moulage par transfert de résine ou RTM (pour "resin transfer molding"), la réaction-injection-moulage (ou RIM) ou toutes autres méthodes connues de l'homme de l'art, telles que décrites dans les ouvrages «Epoxy Polymer», édité par J.P. Pascault et R.J.J. Williams, Wiley-VCH, Weinheim 2010 ou «Chimie industrielle », par R. Perrin et J.P. Scharff, Dunod, Paris 1999.
La mise en forme peut consister en une mise sous forme de poudre ou de grains par toute technique connue de l'homme du métier. Un broyage mécanique peut également être effectué à l'issue de l'étape d).
Pour ce qui concerne la mise en forme de la composition sous forme de revêtement, on peut avantageusement mettre en œuvre toute méthode connue en la matière, en particulier : l'application de la composition à la brosse ou au rouleau ; le trempage d'un support à revêtir dans la composition ; l'application de la composition sous forme d'une poudre.
Si l'on essaye de mettre en forme une composition de résine thermodurcie de l'art antérieur de la même manière que décrit plus haut, le matériau ou l'objet obtenu n'est plus déformable ni réparable, ni recyclable une fois que le point de gel de la résine est atteint ou dépassé. L'application d'une température modérée à un tel objet selon l'art antérieur ne conduit à aucune transformation observable ou mesurable, et l'application d'une température très élevée conduit à la dégradation de cet objet.
Au contraire, les objets de l'invention, du fait qu'ils sont fabriqués à partir d'une composition conforme à l'invention, peuvent être déformés, soudés, réparés et recyclés par une élévation de leur température.

Par « application d'une énergie permettant le durcissement de la résine » on entend généralement une élévation de température. L'application d'une énergie permettant le durcissement de la résine peut par exemple consister en un chauffage à une température allant de 50 à 250°C, par exemple de 50 à 120°C. On peut aussi effectuer une activation par radiations, par exemple par rayons UV ou faisceau électronique, ou par voie chimique, en particulier radicalaire, par exemple au moyen de peroxydes.

Le refroidissement de la résine thermodurcie est habituellement opéré en laissant le matériau ou l'objet revenir à la température ambiante, avec ou sans utilisation d'un moyen de refroidissement.

Un objet conforme à l'invention peut être composite. Il peut notamment résulter de l'assemblage d'au moins deux objets, dont l'un au moins, et avantageusement les deux, comporte au moins une résine thermodurcie obtenue à partir d'au moins une composition conforme à l'invention.

Il s'agit par exemple d'un matériau stratifié, comportant une superposition en alternance de couches de résine thermodurcie obtenue à partir d'au moins une composition conforme à l'invention, avec des couches de bois, de métal, ou de verre.

Un objet de l'invention peut également comprendre un ou plusieurs composants additionnels choisis parmi ceux précités et en particulier: des polymères, des pigments, des colorants, des charges, des plastifiants, des fibres longues ou courtes, tissées ou non, des agents retardateurs de flamme, des agents antioxydants, des lubrifiants, du bois, du verre, des métaux. Lorsqu'un tel objet est fabriqué conformément à l'un des procédés de fabrication décrits plus haut, les composés additionnels peuvent être introduits avant, pendant ou après l'étape a).

Procédé de déformation

Les résines thermodurcies obtenues comme décrit ici présentent l'avantage de présenter une variation lente de viscosité sur une large gamme de températures, ce qui rend le comportement d'un objet de l'invention comparable à celui des verres inorganiques et permet de leur appliquer des procédés de déformation qui ne sont généralement pas applicables aux thermodurs classiques.

Il peut ainsi être façonné en appliquant des contraintes de l'ordre de 1 à 10 MPa sans pour autant couler sous son propre poids.

De la même façon, on peut déformer cet objet à une température supérieure à la température Tg, puis dans un deuxième temps éliminer les contraintes internes à une température plus élevée.

La faible viscosité de ces objets à ces températures permet notamment l'injection ou le moulage sous presse. Il faut noter qu'aucune dépolymérisation n'est constatée à des températures élevées et les objets de l'invention conservent leur structure réticulée. Cette propriété permet la réparation d'un objet de l'invention qui se trouverait fracturé en au moins deux parties par un simple soudage de ces parties entre elles. Aucun moule n'est nécessaire pour maintenir la forme des objets de l'invention pendant le processus de réparation à des températures élevées. De la même façon, on peut transformer un objet de l'invention par application d'une contrainte mécanique à une partie seulement de l'objet sans faire appel à un moule car les objets de l'invention ne coulent pas. Toutefois, les objets de grande taille, qui ont davantage tendance à s'affaisser, pourront être maintenus par un bâti comme pour le travail du verre.

Ainsi, l'objet tel que décrit plus haut peut être déformé suivant un procédé comprenant l'application à l'objet d'une contrainte mécanique à une température (T) supérieure à la température Tg. L'assemblage, le soudage, la réparation et le recyclage constituent un cas particulier de ce procédé de déformation. De préférence, pour permettre la déformation dans une durée compatible avec une application industrielle, le procédé de déformation comprend l'application à l'objet de l'invention d'une contrainte mécanique à une température (T) supérieure à la température de transition vitreuse Tg de la résine thermodurcie qu'il contient.

Habituellement, un tel procédé de déformation est suivi d'une étape de refroidissement jusqu'à la température ambiante, éventuellement avec application d'au moins une contrainte mécanique. Par « contrainte mécanique », on entend au sens de la présente invention, l'application d'une force mécanique, localement ou sur tout ou partie de l'objet, cette force mécanique tendant à une mise en forme ou une déformation de l'objet. Parmi les contraintes mécaniques qui peuvent être employées, on peut mentionner : la pression, le moulage, le malaxage, l'extrusion, le soufflage, l'injection, l'estampage, la torsion, la flexion, la traction et le cisaillement. Il peut s'agir par exemple d'une torsion appliquée à objet de l'invention sous forme de ruban. Il peut s'agir d'une pression appliquée à l'aide d'une plaque ou d'un moule sur une ou plusieurs faces d'un objet de l'invention, de l'estampage d'un motif dans une plaque ou une feuille. Il peut encore s'agir d'une pression exercée parallèlement sur deux objets de l'invention en contact l'un avec l'autre de façon à provoquer un soudage de ces objets. Dans le cas où l'objet de l'invention consiste en des granulés, la contrainte mécanique peut consister en un malaxage, par exemple au sein d'un mélangeur ou autour de la vis d'une extrudeuse. Elle peut aussi consister en une injection ou une extrusion. La contrainte mécanique peut également consister en un soufflage, qui peut par exemple être appliqué à une feuille d'objet de l'invention. La contrainte mécanique peut également consister en une multiplicité de contraintes distinctes, de même nature ou non, appliquées de façon simultanée ou successive à tout ou

partie du objet de l’invention, ou de façon localisée.

Ce procédé de déformation peut inclure une étape de mélange ou d’agglomération de l’objet de l’invention avec un ou plusieurs composants additionnels choisis parmi ceux cités précédemment et en particulier : des polymères, des pigments, des colorants, des charges, des plastifiants, des fibres longues ou courtes, tissées ou non, des agents retardateurs de flamme, des agents antioxydants, des lubrifiants.

L’élévation de la température dans le procédé de déformation peut être réalisée par tout moyen connu comme le chauffage par conduction, convection, induction, par point, infra rouge, micro-onde ou radiant. Les moyens permettant de provoquer une élévation de température pour la mise en œuvre des procédés de l’invention comprennent : un four, un four à micro-ondes, une résistance chauffante, une flamme, une réaction chimique exothermique, un faisceau laser, un fer à repasser, un pistolet à air chaud, une cuve à ultrasons, un poinçon chauffant... L’élévation de température peut être faite par pallier ou non et sa durée est adaptée au résultat attendu.

Bien que la résine ne coule pas durant sa déformation, grâce aux réactions d’échange, en choisissant une température, une durée de chauffage et des conditions de refroidissement appropriées, la nouvelle forme peut être exempte de toute contrainte résiduelle. L’objet n’est donc pas fragilisé ou fracturé par l’application de la contrainte mécanique. Et si l’objet déformé est ultérieurement réchauffé, il ne reviendra pas à sa forme première. En effet, les réactions d’échange qui surviennent à haute température favorisent une réorganisation des points de réticulation du réseau de la résine thermodurcie de manière à annuler les contraintes mécaniques. Une durée de chauffage suffisante permet d’annuler complètement ces contraintes mécaniques internes à l’objet qui ont été causées par l’application de la contrainte mécanique externe.

Cette méthode permet donc d’obtenir des formes complexes stables, difficiles voire impossibles à obtenir par moulage, à partir de formes élémentaires plus simples. Notamment, il est très difficile d’obtenir par moulage des formes résultant d’une torsion. De façon complémentaire, le choix de conditions de température, de durée de chauffage sous contrainte et de refroidissement appropriées permet de transformer un objet de l’invention tout en contrôlant la persistance de certaines contraintes mécaniques internes au sein de ce objet, puis, si l’objet ainsi transformé est ultérieurement réchauffé, une nouvelle déformation contrôlée de ce objet par libération contrôlée des contraintes peut être opérée.

<u>Procédés de recyclage</u>

L’objet obtenu selon l’invention peut également être recyclé :

- soit par traitement direct de l’objet : par exemple un objet de l’invention cassé ou endommagé est réparé par un procédé de déformation tel que décrit ci-dessus et peut ainsi retrouver sa fonction d’usage antérieure ou une autre fonction ;
- soit l’objet est réduit en particules par application d’un broyage mécanique, et les particules ainsi obtenues sont ensuite mises en œuvre dans un procédé de fabrication d’un objet conforme à l’invention. Notamment, selon ce procédé, les particules sont soumises simultanément à une élévation de température et à une contrainte mécanique permettant leur transformation en un objet conforme à l’invention.

La contrainte mécanique permettant la transformation des particules en objet peut par exemple comporter une compression dans un moule, un malaxage, et/ou une extrusion. Cette méthode permet notamment, par l’application d’une température suffisante et d’une contrainte mécanique appropriée, de mouler de nouveaux objets à partir des objets de l’invention.

Un autre avantage de l’invention est de permettre de fabriquer des objets à base de résine thermodurcie à partir de matières premières solides. Ces matières premières solides sont ainsi des objets selon l’invention sous forme de pièces, d’une unité élémentaire ou d’un ensemble d’unités élémentaires.

Par « unités élémentaires », on entend des pièces qui ont une forme et/ou un aspect adaptée à leur transformation ultérieure en objet, comme par exemple : particules, granulés, billes, bâtonnets, plaques, feuilles, films, rubans, tiges, tubes etc....

Par « ensemble d’unités élémentaires », on entend au moins 2 unités élémentaire, par exemple au moins 3, au moins 5, au moins 10, voire au moins 100 unités élémentaires.

Tout procédé connu de l’homme du métier peut être employé à cette fin. Ces pièces élémentaires sont ensuite transformables, sous l’action conjointe de la chaleur et d’une contrainte mécanique, en des objets de la forme souhaitée : par exemple, des rubans peuvent par estampage être découpés en pièces plus petites de forme choisie, des feuilles peuvent être superposées et assemblées par compression. Ces pièces élémentaires à base de résine thermodurcie sont plus facilement stockables, transportables et manipulables que les formulations liquides dont elles sont issues. En effet, l’étape de transformation des pièces élémentaires conforme à l’invention peut être réalisée par l’utilisateur final sans équipement de chimie (non toxicité, pas de date de péremption, pas de COV, pas de pesée de réactifs).

Un cas particulier du procédé de déformation déjà décrit comprend ainsi :

a) l'utilisation comme matière première d'un objet de l'invention sous forme d'une unité élémentaire ou d'un ensemble d'unités élémentaires,
b) l'application simultanée d'une contrainte mécanique et d'une élévation de température pour mettre en forme l'objet pour former un nouvel objet,
c) le refroidissement de l'objet résultant de l'étape b).

Un autre avantage de ce procédé est de permettre le recyclage du nouvel objet fabriqué, celui-ci pouvant être reconditionné sous forme d'unités ou pièces élémentaires qui peuvent à leur tour être remises en forme, conformément à l'invention.
Le procédé de recyclage d'un objet de l'invention peut comprendre :

a) l'utilisation d'un objet de l'invention comme matière première,
b) l'application d'une contrainte mécanique et éventuellement d'une élévation de température simultanée pour transformer cet objet en un ensemble d'unités élémentaires,
c) le refroidissement de cet ensemble d'unités élémentaires.

Applications

Les domaines d'application de la présente invention sont principalement ceux des résines thermodurcissables, en particulier ceux des résines époxy, notamment l'automobile (ce qui regroupe tout type de véhicule motorisé y compris les poids-lourds), l'aéronautique, le nautisme, l'aérospatiale, le sport, le bâtiment, l'électrique, l'isolation électrique, l'électronique, l'éolien, l'emballage et l'imprimerie.
Les compositions, matériaux et objets de l'invention peuvent par exemple être incorporés dans des formulations, notamment avec des additifs typiques tels que des charges, des antioxydants, des retardateurs de flamme, des protecteurs UV, des pigments, des colorants. Les formulations peuvent par exemple servir au couchage du papier, à la fabrication d'encres, de peintures. Les matériaux ou objets de l'invention peuvent être utilisés sous forme de poudres, de granulés, ou encore être incorporés dans des matériaux composites, en particulier ceux comportant des fibres de verre, de carbone, d'aramide, ou d'origine végétale (fibres de lin, de chanvre,...). Ces fibres peuvent être des fibres longues ou des fibres courtes, tissées ou non. Les compositions de l'invention peuvent aussi être appliquées comme revêtements, par exemple comme vernis de protection des métaux, protection de tuyaux, protections de sols.
Les compositions de l'invention peuvent encore servir à fabriquer des adhésifs, avantageusement ceux thermoréticulables ou photoréticulables, à encapsuler des connecteurs (la composition de l'invention pouvant être appliquée par potting ou injection), à réaliser des pièces d'isolateurs électriques ou encore à réaliser des prototypes.

FIGURES

**La Figure 1** représente la superposition des spectres RMN $^1H$ ($CDCl_3$, 400MHz) de différents catalyseurs d'effet vitrimère.
**La Figure 2** représente la superposition des courbes ATG du catalyseur $Zn(acac)_2$ et du catalyseur $Ti(PPD)_2$.
**La Figure 3** illustre la superposition des relaxations de contrainte (à 260°C) des vitrimères catalysés par 5%mol de $Ti(iPr)_4$, et par 5%mol $Ti(PPD)_2$ et par 5%mol de $Zn(acac)_2$. La force statique est représentée en fonction du temps.
**La Figure 4** illustre la variation du temps de relaxation pour un réseau DGEBA/Anhydride Glutarique catalysé par 5%mol de $Ti(PPD)_2$ en fonction de l'inverse de la température.
**La Figure 5** illustre les courbes de DMA d'un système DGEBA/Anhydride Glutarique 1:0,5 avec 5%mol de $Ti(PPD)_2$.

EXEMPLES

Les exemples suivants illustrent l'invention sans la limiter.

**Méthodes de caractérisation**

Analyse par résonance magnétique nucléaire : Toutes les analyses par résonance magnétique nucléaire (RMN) ont été réalisées sur un appareil de fréquence de résonnance à 400MHz, avec le chloroforme comme solvant deutéré et à des concentrations de 8mg/mL.
Analyse thermique : la Tg des échantillons des Exemples 2 à 4 a été caractérisée par analyse calorimétrique différentielle à balayage (DSC). Le protocole suivant a été appliqué : premier échauffement à 10°C/min de -70°C à

170°C, isotherme de 5 min à 170°C, refroidissement à -10°C/min jusqu'à -70°C, isotherme à -70°C pendant 5 min puis second échauffement jusqu'à 170°C à 10°C/min.

Analyse mécanique : les modules de conservation (G') des échantillons des exemples 2 à 4 ont été mesurés par analyse mécanique dynamique (DMA) en géométrie flexion 3 points. Le protocole suivant a été appliqué : Amplitude d'oscillation de 25μm, fréquence 1Hz, température de départ à -25°C, température finale à 200°C, chauffage de 3°C/min. Les essais ont été réalisés sur des échantillons de dimensions 30mmx13mmx1,5mm.

Les échantillons des exemples 5 à 8 ont également été soumis à une analyse par DMA, dans des conditions légèrement différentes. Précisément, un barreau de dimensions 10x30x3mm a été fixé entre deux pinces et sollicité en torsion rectangulaire (déformation imposée de 0,05%) dans un appareil RDA3 de RHEOMETRIC SCIENTIFIC, avec une fréquence de 1 Hz, en effectuant un balayage en température de 25 à 250°C avec une rampe de température de 3°C/min. La valeur de Tα a été déterminée au sommet du pic de la courbe de tanδ, et est considérée ci-après comme la Tg de l'échantillon, tandis que le module de conservation G' a été déterminé sur le plateau caoutchoutique à 200°C.

**Exemple 1 : Préparation d'un catalyseur selon l'invention, et sa caractérisation**

Cet exemple illustre la synthèse d'un complexe organométallique de titane, utilisé comme catalyseur selon l'invention.

Le schéma réactionnel est représenté ci-dessous :

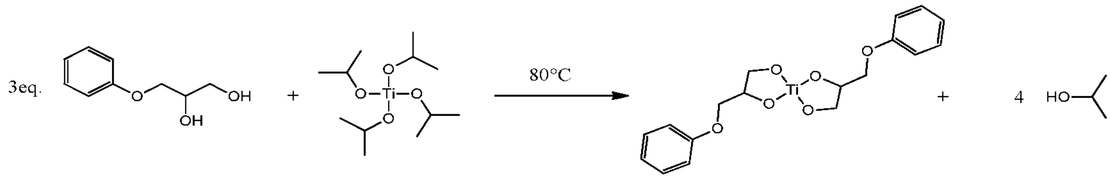


On a placé le phénoxypropanediol (10g, 0,06 mol) dans un ballon monocol de volume 100 mL, puis on a chauffé le ballon jusqu'à ce que le réactif soit liquide (80°C) et on a laissé agiter 15 min. Toujours à 80°C, on a ajouté l'isopropoxyde de titane (5,63 g, 0,02 mol) au goutte-à-goutte, très lentement. On a laissé agiter 4h sous atmosphère inerte puis on a placé progressivement le milieu sous vide dynamique à 80°C où on l'a laissé pendant 15h afin d'éliminer l'isopropanol. La réaction d'échange de ligands était quasi-instantanée. Au cours de l'ajout de l'isopropoxyde de titane, le produit précipitait et le milieu réactionnel devenait blanc. Afin d'éliminer l'excès de ligand, on a placé le produit en fin de réaction (sous forme solide) dans un erlenmeyer avec 100 mL de chloroforme et on a laissé agiter une nuit (le phénoxypropanediol est très soluble dans le chloroforme). Le produit a été récupéré par filtration puis séchage sous vide dynamique à 50°C pendant 15h.

Le produit final a été caractérisé par RMN du proton (voir la Figure 1). Par la suite, il sera nommé $Ti(PPD)_2$.

La solubilité du composé $Ti(PPD)_2$ dans une résine époxy DGEBA et dans un système DGEB A/anhydride a été testée comme suit :

*Test de solubilité dans DGEBA*

Le DGEBA (DER 330 - 2,1 g, 12,1 mmol) et le $Ti(PPD)_2$ (0,232 g, 0,6 mmol ; 5 %mol) sont ajoutés dans un tube de Schlenk. Le mélange est placé sous agitation dans un bain d'huile à 130 °C. Le mélange reste trouble, le catalyseur étant seulement dispersé et non solubilisé. Au bout de 60 min, un échantillon est prélevé et analysé par spectroscopie infrarouge afin de vérifier l'état du DGEBA. On constate que la bande d'absorption correspondant à la fonction époxyde est encore à plus de 95% intacte, indiquant que l'homopolymérisation anionique du DGEBA n'est pas amorcée par la présence du composé de titane $Ti(PPD)_2$ dans le milieu à 130°C.

*Test de solubilité dans le mélange réactif DGEBA + anhydride glutarique*

Au mélange précédent est ajouté l'anhydride glutarique (0,689 g, 6 mmol ; 50 mol%), toujours sous agitation à 130°C. La quantité est ajustée de sorte qu'il y ait autant de fonctions époxyde que d'acide dans le milieu (même conditions que lors d'une synthèse d'une plaque vitrimère). L'effet est quasi-instantané avec la disparition totale de catalyseur sous forme solide dans le mélange. Celui-ci devient coloré et translucide.

La réaction a été suivie par spectroscopie infrarouge montrant la chute de l'intensité de la bande d'absorption correspondant à la fonction époxyde (916 $cm^{-1}$), illustrant l'avancement de la réaction.

**Exemple 2 : Synthèse d'un réseau époxy-anhydride en présence de 5 % de Ti(PPD)$_2$**

Dans un bécher en Teflon ont été ajoutés : 19g de résine époxy de type DGEBA (DER332) sous forme liquide (DOW, Masse Epoxy Equivalente : 174g/eq) et 2,1g de Ti(PPD)$_2$ préparé à l'Exemple 1 (MW = 383,87 g/mol), ce qui correspondait à 0,05 atome-gramme de titane par fonction époxy. Les réactifs ont été mélangés tout en chauffant à l'aide d'un pistolet à air chaud (T≈60°C) pendant 2min. Le mélange est devenu blanc, non translucide. On y a ensuite ajouté 6,23g d'anhydride glutarique (CAS 108-55-4, MW = 114,1g/mol) sous forme solide, en chauffant à l'aide d'un pistolet à air chaud (T≈150°C) jusqu'à solubilisation complète. Le mélange n'était plus blanc et devenait translucide. A ce moment-là, il a été coulé dans un moule de dimensions 100x100x1,4mm (préchauffé à 140°C) entre deux feuilles de papier siliconé antiadhésif, puis mis à cuire sous presse à 140°C pendant 8h.

Une mesure de spectre infrarouge réalisée sur le matériau en fin de réaction a mis en évidence la disparition complète des signaux de l'anhydride (1810cm$^{-1}$) et de l'époxy (915cm$^{-1}$). Sur l'échantillon après polymérisation, on a enregistré la bande caractéristique des fonctions ester à 1735cm$^{-1}$ et un large massif d'absorption à 3200-3600cm$^{-1}$, caractéristique des groupes hydroxyles.

Le matériau présentait en DMA une Tg de l'ordre de 70°C, un module de conservation de 2,2 GPa à 25°C et de 25 MPa à 150°C.

Sa courbe de DMA est présentée à la Figure 5. Comme il ressort de cette Figure, le matériau présente un module de conservation à 25°C et à 150°C de 2,2 GPa et de 25 MPa respectivement. La valeur T$\alpha$ est de 74°C et la finesse du pic de tan delta montre que le matériau est homogène.

En outre, la Figure 4 présente la variation du temps de relaxation de ce matériau en fonction de l'inverse de la température. Comme il ressort de cette Figure, le temps de relaxation suit une loi d'Arrhenius du type :

$$\frac{1}{\tau} = \frac{1}{\tau_0} e^{-\frac{E_a}{RT}}$$

Où $\tau_0$ la constante de normalisation est un temps (s), $E_a$ est l'énergie d'activation (J.mol$^{-1}$.K$^{-1}$), R la constante universelle des gaz parfaits (J.mol$^{-1}$), et T la température (K). L'énergie d'activation, déterminée à partir de la pente ($E_a$/R), est d'environ 80 kJ.mol$^{-1}$.K$^{-1}$.

**Exemple comparatif 3 : Synthèse d'un réseau époxy-anhydride en présence de 5% d'acétylacétonate de zinc**

Un échantillon comparatif a été préparé en utilisant le même protocole que dans l'Exemple 2, mais en utilisant l'acétylacétonate de zinc comme catalyseur à la même concentration, autrement dit à 0,05 atome-gramme de titane par fonction époxy.

Le matériau présentait en DMA une Tg de l'ordre de 70°C, un module de conservation de 2 GPa à 25°C et de 19 MPa à 150°C.

**Exemple 4,** non représentatif de l'invention **: Synthèse d'un réseau époxy-anhydride en présence de 5% d'isopropoxyde de titane**

Un échantillon a été préparé en utilisant le même protocole que dans l'Exemple 2, mais en utilisant l'isopropoxyde de titane (CAS 546-68-9, MW = 284,22g/mol) comme catalyseur à la même concentration, autrement dit à 0,05 atome-gramme de titane par fonction époxy.

Le matériau présentait en DMA une Tg de l'ordre de 67°C, un module de conservation de 2,4 GPa à 25°C et de 8,5 MPa à 150°C.

**Exemple 5:** Non représentatif de l'invention. **Synthèse d'un réseau époxy-anhydride en présence de 10% d'isopropoxyde de titane**

On a préparé trois échantillons de matériau vitrimère (respectivement 5a, 5b et 5c) suivant la méthode suivante.

Dans un bécher ont été ajoutés une résine époxy de type DGEBA (DER332) sous forme liquide (DOW, Masse Epoxy Equivalente : 174g/eq), de l'anhydride méthyl tétrahydrophthalique (MTHPA) (MW = 166,18g/mol) et de l'isopropoxyde de titane (fourni par DORF KETAL), à raison de 0,1 atome-gramme de titane par fonction époxy. Les réactifs ont été mélangés puis homogénéisés dans un bain d'huile thermostaté à 100°C pendant environ 10 minutes. Le mélange a ensuite été coulé dans un moule métallique creux de 70x140x3mm légèrement siliconé. Le moule a été solidarisé par un joint en silicone à une plaque métallique recouverte d'un revêtement en Teflon, puis l'ensemble a été introduit dans une presse chauffante préalablement réglée à une température de 140°C et placée en début de cuisson à une pression

de 10 bars. La cuisson a été effectuée pendant 17 heures.

Pour fabriquer ces échantillons, on a utilisé un ratio molaire des fonctions époxyde de la résine aux fonctions anhydride du durcisseur respectivement égal à 1/0,8 ; 1/1 et 1/1,2.

On a mesuré la Tg par DMA et le module de conservation des matériaux ainsi obtenus.

Ces matériaux présentaient respectivement une Tg de 118°C, 116°C et 102°C et un module de conservation à 200°C de 17 MPa, 12,6 MPa et 11,6 MPa.

**Exemple comparatif 6 : Synthèse d'un réseau époxy-anhydride en présence de 10% d'acétylacétonate de zinc**

Trois échantillons de matériau (respectivement 6a, 6b et 6c) ont été préparés de manière identique à l'exemple 5, excepté que le catalyseur était remplacé par l'acétylacétonate de zinc ou $Zn(acac)_2$.

Ces matériaux présentaient respectivement une Tg, de 138°C, 130°C et 112°C et un module de conservation à 200°C de 16 MPa, 13,5 MPa et 10,2 MPa.

**Exemple 7**, non représentatif de l'invention **: Synthèse d'un réseau époxy-anhydride en présence de 10% d'acétylacétonate de titane**

On a préparé un échantillon de matériau de manière identique à l'exemple 5, en utilisant un ratio molaire des fonctions époxyde de la résine aux fonctions anhydride du durcisseur égal à 1/0,8, excepté que le catalyseur était remplacé par l'acétylacétonate de titane ou $Ti(acac)_2$. Ce matériau présentait une Tg de 112°C et un module de conservation à 200°C de 8,0 MPa.

**Exemple 8,** non représentatif de l'invention **: Synthèse d'un réseau époxy-anhydride en présence d'isopropoxyde de titane et d'un catalyseur additionnel de type amine**

On a préparé deux échantillons de matériau vitrimère suivant un procédé similaire à celui décrit à l'Exemple 5, dont les conditions opératoires ont été modifiées comme décrit dans le Tableau 1 ci-dessous. Des échantillons supplémentaires ont été préparés en ajoutant une quantité variable de catalyseur additionnel de type amine, à savoir soit la 2-méthyl imidazole (ci-après "2-MIA") soit le 2,4,6-tri(diméthylaminométhyl) phénol (ci-après, "Anc" pour Ancamine K54 d'AIR PRODUCTS), au système avant durcissement.

Tableau 1

| Echantillon | 8a | 8b | 8c | 8d | 8e | 8f |
|---|---|---|---|---|---|---|
| Epoxyde | DER332 | DER332 | DER332 | DER332 | DER332 | DER332 |
| Durcisseur | MTHPA | MTHPA | MTHPA | MTHPA | MTHPA | MTHPA |
| Additif | - | 2-MIA | 2-MIA | - | Anc | Anc |
| Catalyseur | $Ti(iPr)_4$ | $Ti(iPr)_4$ | $Ti(iPr)_4$ | $Ti(iPr)_4$ | $Ti(iPr)_4$ | $Ti(iPr)_4$ |
| %mol amine/époxy | - | 0,5% | 2,5% | - | 1% | 2% |
| %mol catalyseur/époxy | 5% | 5% | 5% | 10% | 10% | 10% |
| Tg(°C) | 136 | 122 | 120 | 118 | 108 | 114 |
| G' (MPa) | 17 | 12 | 12 | 17 | 13 | 17 |

**Exemple 9** : **Etude des propriétés de relaxation et de déformation de différents matériaux vitrimères**

a) Les échantillons des Exemples 2, 3 et 4 ont été soumis à une expérience de relaxation de contrainte : les temps de relaxation de contrainte ont été mesurés à l'aide d'une DMA (ou DMTA pour Dynamic Mechanical Thermal Analysis) en géométrie flexion 3 points. Le protocole suivant a été appliqué : échauffement jusqu'à température du test, isotherme de 20min puis application d'une déformation de 1%. Les essais ont été réalisés sur des échantillons de dimensions 30mmx13mmx1,4mm.

Les résultats sont rassemblés sur la Figure 3 annexée. Comme le montre cette Figure, les échantillons obtenus à partir des catalyseurs selon l'invention présentent des performances similaires et nettement supérieures à celles

du matériau obtenu à partir d'acétylacétonate de zinc, dans la mesure où leurs contraintes sont relaxées de manière plus complète et plus rapide.

b) Parallèlement, chacun des échantillons préparés suivant les Exemples 5 à 8 a été soumis à une expérience consistant à imposer à une éprouvette de matériau de 40x20x2mm une déformation sous flux d'azote, en flexion 3 points, à l'aide d'un appareil Metravib de type DMA50N, après que l'échantillon ait été porté à une température égale à $T\alpha$ + 100°C et stabilisé pendant 5 min à cette température. L'évolution des contraintes induites dans le matériau pour maintenir la déformation constante est suivie pendant 5000 secondes et mesurée à l'aide d'un capteur. On impose ensuite à l'échantillon une force égale à zéro et on mesurer la déformation (recouvrance) de l'échantillon pendant 5000 secondes supplémentaires. Lorsque le matériau conserve la déformation qui lui a été imposée, on considère que toutes les contraintes ont été relaxées. On trace ensuite la contrainte normalisée ($\sigma/\sigma o$ en fonction du temps et on relève, pour chaque essai, le temps de relaxation $\tau$ nécessaire pour obtenir une valeur de contrainte normalisée égale à 1/e, ainsi que le pourcentage de contraintes relaxées à 5000 secondes, désigné ci-après par $\sigma_{5000s.}$

Les résultats obtenus sont rassemblés dans le Tableau 2 ci-dessous.

Tableau 2

| Ech. | 5a | 5b | 5c | 6a comp | 6b comp | 6c comp | 7 |
|---|---|---|---|---|---|---|---|
| $\tau$ (s) | 75 | 510 | 370 | 1105 | 1565 | 3630 | 555 |
| $\sigma_{5000s}$ (%) | 100 | 100 | 100 | 100 | 84 | 69 | 100 |
| Ech. | 8a | 8b | 8c | 8d | 8e | 8f | |
| $\tau$ (s) | 2430 | 1060 | 735 | 75 | 45 | 23 | |
| $\sigma_{5000s}$ (%) | 75 | 85 | 100 | 100 | 100 | 100 | |

Comme il ressort de ce tableau, les catalyseurs selon l'invention (échantillons 5a à 5c et 7) permettent d'obtenir des matériaux capables de relaxer leurs contraintes de manière plus complète et plus rapide que les matériaux obtenus à partir de la même quantité de catalyseur à base d'acétylacétonate de zinc (échantillons 6a à 6c). Par ailleurs, ces performances ne sont pas obtenues au détriment des propriétés mécaniques du matériau. En outre, ces performances des catalyseurs selon l'invention sont encore améliorées en présence d'un catalyseur additionnel de type amine comme le montre la comparaison des échantillons 8b et 8c avec l'échantillon 8a et des échantillons 8e et 8f avec l'échantillon 8d.

**Exemple 10** : **Etude de la stabilité thermique de différents matériaux vitrimères**

a) Les échantillons des Exemples 2, 3 et 4 ont été soumis à une analyse thermogravimétrique (ATG). 10mg de produit (catalyseur ou résine) ont été placés dans une capsule en alumine. Les mesures gravimétriques ont été réalisées de 25°C à 900°C, à 10°C/min.

Les échantillons obtenus à partir des catalyseurs selon l'invention sont plus stables que ceux obtenus à partir d'acétylacétonate de zinc, dans une gamme de températures adaptées à leur transformation industrielle, c'est-à-dire jusqu'à une température de 200°C environ. Le catalyseur à base de $Ti(PPD)_2$ est même stable au-delà de cette température et ne se dégrade pas sensiblement jusqu'à 300°C.

En particulier, il a été observé que le matériau de l'Exemple 2 présentait une perte de masse de 0,07% seulement à 260°C, alors que le matériau de l'Exemple comparatif 3 présentait une perte de masse de 1,68% à la même température.

b) La Figure 2 annexée montre que le catalyseur $Zn(acac)_2$ est moins stable thermiquement que le catalyseur $Ti(PPD)_2$ puisqu'il se dégrade dès 200°C alors que ce dernier ne subit qu'une faible perte de masse jusqu'à 300°C.

c) On a par ailleurs évalué la stabilité thermique des matériaux des Exemples 5a et 6a ainsi que de l'exemple 2,par ATG sur un appareil Perkin Elmer de type TGA7, en effectuant un balayage de températures de 25°C à 500°C suivant une rampe de 10°C/min. La température conduisant à une perte de matière de 1% était de 176°C dans le cas du matériau de l'Exemple comparatif 6a et de 235°C dans le cas du matériau de l'Exemple 5a, ce qui confirme la meilleure tenue thermique des matériaux selon l'invention aux températures de remise en forme et de recyclage.

La température conduisant à une perte de matière de 1% était de 254°C dans le cas du matériau de l'Exemple 2 réalisé avec le $Ti(PPD)_2$.
En particulier, il a été observé que le matériau de l'Exemple 2 présentait une perte de masse de 0,07% seulement à 260°C, alors que le matériau de l'Exemple comparatif 3 présentait une perte de masse de 1,68% à la même température.

b) La Figure 2 annexée montre que le catalyseur $Zn(acac)_2$ est moins stable thermiquement que le catalyseur $Ti(PPD)_2$ puisqu'il se dégrade dès 200°C alors que ce dernier ne subit qu'une faible perte de masse jusqu'à 300°C.

c) On a par ailleurs évalué la stabilité thermique des matériaux des Exemples 5a et 6a ainsi que de l'exemple 2,par ATG sur un appareil Perkin Elmer de type TGA7, en effectuant un balayage de températures de 25°C à 500°C suivant une rampe de 10°C/min. La température conduisant à une perte de matière de 1% était de 176°C dans le cas du matériau de l'Exemple comparatif 6a et de 235°C dans le cas du matériau de l'Exemple 5a, ce qui confirme la meilleure tenue thermique des matériaux selon l'invention aux températures de remise en forme et de recyclage.
La température conduisant à une perte de matière de 1% était de 254°C dans le cas du matériau de l'Exemple 2 réalisé avec le $Ti(PPD)_2$.

## Revendications

1. Complexe organométallique de titane répondant à la structure bis(3-phenoxy-1,2-propandioxyde) de titane (Ti(PPD)2).

2. Composition comprenant au moins :

   - un catalyseur comprenant, et de préférence constitué par, un complexe organométallique de titane tel que défini dans la revendication 1 ;
   - une résine thermodurcissable comprenant au moins une et avantageusement plusieurs fonctions époxyde et optionnellement au -moins une et avantageusement plusieurs fonctions hydroxyle libre et/ou ester, et un durcisseur de résine thermodurcissable choisi parmi les anhydrides d'acide carboxylique.

3. Composition selon la revendication 2, **caractérisée en ce que** la résine thermodurcissable est choisie dans la famille des glycidyle esters, glycidyle éthers, glycidyle amines, glycidyle isocyanurates, comprenant au moins deux groupes glycidyle par molécule, ou parmi les composés oléfiniques époxydés linéaires, ramifiés ou cycliques à plus de six chaînons.

4. Composition selon la revendication 2 ou 3, **caractérisée en ce que** la résine thermodurcissable est choisie dans la famille des glycidyle esters, glycidyle éthers, glycidyle amines, glycidyle isocyanurates, comprenant au moins deux groupes glycidyle par molécule, notamment parmi les résines époxy Novolac, le bisphénol A diglycidyl éther (DGEBA), le bisphénol A diglycidyl éther hydrogéné, le bisphénol F diglycidyl éther, la tétraglycidyl méthylène dianiline (TGMDA), le pentaérythritol tétraglycidyl éther, le triméthylol triglycidyl ether (TMPTGE), le tétrabromo bisphénol A diglycidyl éther, ou *les* hydroquinone diglycidyl éther, l'éthylène glycol diglycidyl éther, le propylène glycol diglycidyl éther, le butylène glycol diglycidyl éther, le néopentyl glycol diglycidyl éther, le 1,4-butanediol diglycidyl éther,
le 1,6-hexanediol diglycidyl éther, le cyclohexanediméthanol diglycidyl éther, le polyéthyléne glycol diglycidyl éther, le polypropylène glycol diglycidyl éther, le polytétramét11ylène glycol diglycidyl éther, le résorcinol diglycidyl éther, le néopentylglycol diglycidyl éther, le bisphénol A polyéthylène glycol diglycidyl éther, le bisphénol A polypropylèneglycol diglycidyl éther, le diglycidyl ester d'acide phtalique, isopthalique ou téréphtalique, le poly(glycidyle-acrylate), le poly(glycidyle-méthacrylate), les glycidyl esters de l'acide versatique encore appelés diglycidyl ester de dimères d'acides, le polyglycidyl éther d'huile de ricin, le triglycidyl isocyanurate (TGIC), et leurs mélanges.

5. Composition selon la revendication 2 ou 3, **caractérisée en ce que** la résine thermodurcissable est choisie parmi les composés oléfiniques époxydés linéaires, ramifiés ou cycliques à plus de six chaînons, notamment parmi les acides gras polyinsaturés époxydés, les
huiles végétales époxydées, les résines cycloaliphatiques époxydées, le glycidyl méthacrylate,
les glycidyl (méth)acrylates alkoxylés; les C8-C10 alkyl glycidyl éthers, les C12-C14 alkyl glycidyl ethers, le glycidyl ester d'acide néodecanoïque, le butyl glycidyl éther, le crésyl glycidyl éther, le phényl glycidyl éther, le p-nonyphényl glycidyl éther, le p-nonylphényl glycidyl éther, le p+butyl phényl glycidyl éther, le 2-éthylhexyl glycidyl éther, et leurs

mélanges.

6. Composition selon la revendication 2 ou 3, **caractérisée en ce que** la résine thermodurcissable est choisie parmi : le bisphénol A diglycidyl éther (DGEBA), la tétraglycidyl méthylène dianiline (TGMDA), le bisphénol F diglycidyl éther, les résines Novolac, le triméthylol triglycidyl ether (TMPTGE), le diglycidyl ester d'acide phtalique, isopthalique ou téréphtalique, le tétrabromo bisphénol A diglycidyl éther, le 1,4-butanediol diglycidyl éther, le triglycidyl isocyanurate (TGIC), le poly(glycidyle-méthacrylate) et leurs mélanges.

7. Composition selon l'une quelconque des revendications 2 à 6, **caractérisée en ce que** la résine thermodurcissable est choisie parmi le bisphénol A diglycidyl éther (DGEBA), la tétraglycidyl méthylène dianiline (TGMDA), les résines Novolac, et le (glycidyle. méthacrylate).

8. Composition selon l'une quelconque des revendications 2 à 7, **caractérisée en ce que** la teneur en résine thermodurcissable et en durcisseur va de 10°/o à 90 % en poids, notamment
de 20 % à 80 % en poids voire de 30 à 70 % en poids, relativement au poids total de la composition, le complément à 100% étant apporté par le catalyseur et éventuellement par des composés additionnels choisis parmi : des polymères, des pigments, des colorants, des charges,
des plastifiants, des fibres longues ou courtes, tissées ou non, des agents retardateurs de flamme, des agents antioxydants, des lubrifiants, du bois, du verre, des métaux et leurs mélanges.

9. Composition selon l'une quelconque des revendications 2 à 8, **caractérisée en ce qu'**elle comprend en outre au moins un catalyseur supplémentaire d'ouverture d'époxyde, de préférence choisi panni les amines tertiaires telles que le 2,4,6-tri(diméthylaminométhyl)phénol, et les imidazoles telles que la 2-méthyl imidazole.

10. Kit pour la fabrication d'une composition selon l'une quelconque des revendications 2
à 9, comportant au moins :
une première conposition comprenant le catalyseur, seul, ou avec le durcisseur ou la résine thermodurcissable;

   - éventuellement une deuxième composition co1nprenant le durcisseur ;
   - éventuellement une troisième composition comprenant la résine thermodurcissable.

11. Utilisation de la composition selon l'une quelconque des revendications 2 à 9 pour la fabrication d'un objet en résine thermodurcie déformable à chaud.

12. Objet comprenant une résine thermodurcie obtenue à partir d'une composition telle que définie dans l'une quelconque des revendications 2 à 9.

13. Procédé de déformation d'un objet, tel qu'un procédé d'assemblage, de soudage, de réparation ou de recyclage, comprenant l'application à un objet conforme à la revendication 12 d'une contrainte mécanique à une température (T) supérieure à la température de transition
vitreuse Tg de la résine thermodurcie.

14. Utilisation d'un ou plusieurs objets conformes à la revendication 12 dans les domaines
de l'automobile, l'aéronautique, le nautisme, l'aérospatiale, le sport, le bâtiment, l'électrique, l'isolation électrique, l'électronique, l'éolien, l'emballage, l'imprimerie.

15. Utilisation du complexe organométallique de titane selon la revendication 1 comme catalyseur d'effet vitrimère dans des systèmes à base de résine époxy et de durcisseur de type anhydride.

**Patentansprüche**

1. Titan-Organometallkomplex mit der Struktur Titan-bis(3-phenoxy-1,2-propandioxid) (Ti(PPD)2).

2. Zusammensetzung, die mindestens Folgendes umfasst:

   - einen Katalysator, der einen Titan-Organometallkomplex nach Anspruch 1 umfasst und vorzugsweise daraus besteht;

- ein wärmehärtbares Harz, das mindestens eine und vorteilhafterweise mehrere Epoxidgruppen und gegebenenfalls mindestens eine und vorteilhafterweise mehrere freie Hydroxylgruppen und/oder Estergruppen umfasst, sowie einen Härter für wärmehärtbare Harze, ausgewählt aus Carbonsäureanhydriden.

3. Zusammensetzung nach Anspruch 2, **dadurch gekennzeichnet, dass** das wärmehärtbare Harz aus der Familie der Glycidylester, Glycidylether, Glycidylamine, Glycidylisocyanurate ausgewählt ist, die mindestens zwei Glycidylgruppen pro Molekül umfassen, oder aus unverzweigten, verzweigten oder zyklischen epoxidierten Olefinverbindungen mit mehr als sechs Gliedern.

4. Zusammensetzung nach Anspruch 2 oder 3, **dadurch gekennzeichnet, dass** das wärmehärtbare Harz ausgewählt ist aus der Familie der Glycidylester, Glycidylether, Glycidylamine, Glycidylisocyanurate, die mindestens zwei Glycidylgruppen pro Molekül umfassen, insbesondere aus Novolak-Epoxidharzen, Bisphenol-A-diglycidylether (DGEBA), hydriertem Bisphenol-A-diglycidylether, Bisphenol-F-diglycidylether, Tetraglycidylmethylendianilin (TGMDA), Pentaerythritoltetraglycidylether, Trimethyloltriglycidylether (TMPTGE), Tetrabrombisphenol-A-diglycidylether oder Hydrochinondiglycidylether, Ethylenglycoldiglycidylether, Propylenglycoldiglycidylether, Butylenglycoldiglycidylether, Neopentylglycoldiglycidylether, 1,4-Butandioldiglycidylether, 1,6-Hexandioldiglycidylether, Cyclohexandimethanoldiglycidylether, Polyethylenglycoldiglycidylether, Polypropylenglycoldiglycidylether, Polytetramethylenglycoldiglycidylether, Resorcinoldiglycidylether, Neopentylglycoldiglycidylether, Bisphenol-A-polyethylenglycoldiglycidylether, Bisphenol-A-polypropylenglycoldiglycidylether, Phthal-, Isophthal- oder Terephthalsäurediglycidylester, Poly(glycidylacrylat), Poly(glycidylmethacrylat), Versaticsäure-Glycidylester, die auch als Diglycidylester von Säuredimeren bezeichnet werden, Rizinusöl-Polyglycidylether, Triglycidylisocyanurat (TGIC) und ihren Mischungen.

5. Zusammensetzung nach Anspruch 2 oder 3, **dadurch gekennzeichnet, dass** das wärmehärtbare Harz ausgewählt ist aus unverzweigten, verzweigten oder zyklischen epoxidierten Olefinverbindungen mit mehr als sechs Gliedern, insbesondere aus epoxidierten, mehrfach ungesättigten Fettsäuren, epoxidierten pflanzlichen Ölen, epoxidierten cycloaliphatischen Harzen, Glycidylmethacrylat, alkoxylierten Glycidyl(meth)acrylaten; Cs-$C_{10}$-Alkylglycidylethern, C12-C14-Alkylglycidylethern, Neodecansäure-Glycidylester, Butylglycidylether, Cresylglycidylether, Phenylglycidylether, p-Nonyphenylglycidylether, p-Nonylphenylglycidylether, p-Butylphenylglycidylether, 2-Ethylhexylglycidylether und ihren Mischungen.

6. Zusammensetzung nach Anspruch 2 oder 3, **dadurch gekennzeichnet, dass** das wärmehärtbare Harz ausgewählt ist aus: Bisphenol-A-diglycidylether (DGEBA), Tetraglycidylmethylendianilin (TGMDA), Bisphenol-F-diglycidylether, Novolak-Harzen, Trimethyloltriglycidylether (TMPTGE), Phthal-, Isophthal- oder Terephthalsäurediglycidylester, Tetrabrombisphenol-A-diglycidylether, 1,4-Butandioldiglycidylether, Triglycidylisocyanurat (TGIC), Poly(glycidylmethacrylat) und ihren Mischungen.

7. Zusammensetzung nach einem der Ansprüche 2 bis 6, **dadurch gekennzeichnet, dass** das wärmehärtbare Harz ausgewählt ist aus Bisphenol-A-diglycidylether (DGEBA), Tetraglycidylmethylendianilin (TGMDA), Novolak-Harzen und Glycidylmethacrylat.

8. Zusammensetzung nach einem der Ansprüche 2 bis 7, **dadurch gekennzeichnet, dass** der Gehalt an wärmehärtbarem Harz und an Härter bezogen auf das Gesamtgewicht der Zusammensetzung von 10 Gewichts-% bis 90 Gewichts-%, insbesondere von 20 Gewichts-% bis 80 Gewichts-% oder sogar von 30 bis 70 Gewichts-% reicht, wobei der Rest auf 100% der Katalysator ausmacht und möglicherweise zusätzliche Verbindungen ausgewählt aus: Polymeren, Pigmenten, Farbstoffen, Füllstoffen, Weichmachern, gewebten oder nicht gewebten Lang- oder Kurzfasern, Flammschutzmitteln, Antioxidantien, Schmiermitteln, Holz, Glas, Metallen und ihren Mischungen.

9. Zusammensetzung nach einem der Ansprüche 2 bis 8, **dadurch gekennzeichnet, dass** sie ferner mindestens einen zusätzlichen Katalysator zum Öffnen von Epoxiden umfasst, vorzugsweise ausgewählt aus tertiären Aminen wie 2,4,6-Tri(dimethylaminomethyl)phenol und Imidazolen wie 2-Methylimidazol.

10. Kit zur Herstellung einer Zusammensetzung nach einem der Ansprüche 2 bis 9, das mindestens aufweist:
eine erste Zusammensetzung, die den Katalysator allein oder mit dem Härter oder dem wärmehärtbaren Harz umfasst;

- möglicherweise eine zweite Zusammensetzung, die den Härter umfasst;
- möglicherweise eine dritte Zusammensetzung, die das wärmehärtbare Harz umfasst.

**11.** Verwendung der Zusammensetzung nach einem der Ansprüche 2 bis 9 für die Herstellung eines Gegenstands aus einem wärmeverformbaren wärmegehärteten Harz.

**12.** Gegenstand, der ein wärmegehärtetes Harz umfasst, das aus einer Zusammensetzung nach einem der Ansprüche 2 bis 9 hergestellt ist.

**13.** Verfahren zur Verformung eines Gegenstands, beispielsweise ein Montage-, Schweiß-, Reparatur- oder Recyclingverfahren, das ein mechanisches Beanspruchen eines Gegenstands gemäß Anspruch 12 bei einer Temperatur (T) über der Glasübergangstemperatur Tg des wärmegehärteten Harzes umfasst.

**14.** Verwendung von einem oder mehreren Gegenständen gemäß Anspruch 12 im Bereich Kraftfahrzeuge, Luftfahrt, Wassersport, Raumfahrt, Sport, Bauwesen, im Elektrobereich, im Bereich elektrische Isolierung, Elektronik, Windkraft, Verpackung, Druck.

**15.** Verwendung des Titan-Organometallkomplexes nach Anspruch 1 als Katalysator mit Vitrimerwirkung in Systemen auf Basis von Epoxidharz und Anhydridhärter.

## Claims

**1.** Organometallic titanium complex corresponding to the structure titanium bis(3-phenoxy-1,2-propane dioxide) ($Ti(PPD)_2$).

**2.** Composition comprising at least:

- a catalyst comprising, and preferably consisting of, an organometallic titanium complex as defined in Claim 1,
- a thermosetting resin comprising at least one and advantageously several epoxide functions and optionally at least one and advantageously several free hydroxyl and/or ester functions, and a thermosetting-resin curing agent chosen from carboxylic acid anhydrides.

**3.** Composition according to Claim 2, **characterized in that** the thermosetting resin is chosen from the family of glycidyl esters, glycidyl ethers, glycidyl amines and glycidyl isocyanurates, comprising at least two glycidyl groups per molecule, or from epoxidized olefin compounds which are linear, branched or cyclic comprising more than six members.

**4.** Composition according to Claim 2 or 3, **characterized in that** the thermosetting resin is chosen from the family of glycidyl esters, glycidyl ethers, glycidyl amines and glycidyl isocyanurates, comprising at least two glycidyl groups per molecule, in particular from Novolac epoxy resins, bisphenol A diglycidyl ether (DGEBA), hydrogenated bisphenol A diglycidyl ether, bisphenol F diglycidyl ether, tetraglycidyl methylene dianiline (TGMDA), pentaerythritol tetraglycidyl ether, trimethylol triglycidyl ether (TMPTGE), tetrabromo bisphenol A diglycidyl ether, or hydroquinone diglycidyl ether, ethylene glycol diglycidyl ether, propylene glycol diglycidyl ether, butylene glycol diglycidyl ether, neopentyl glycol diglycidyl ether, 1,4-butanediol diglycidyl ether, 1,6-hexanediol diglycidyl ether, cyclohexanedimethanol diglycidyl ether, polyethylene glycol diglycidyl ether, polypropylene glycol diglycidyl ether, polytetramethylene glycol diglycidyl ether, resorcinol diglycidyl ether, neopentyl glycol diglycidyl ether, bisphenol A polyethylene glycol diglycidyl ether, bisphenol A polypropylene glycol diglycidyl ether, the diglycidyl ester of phthalic, isophthalic or terephthalic acid, poly(glycidyl acrylate), poly(glycidyl methacrylate), versatic acid glycidyl esters, also known as diglycidyl ester of acid dimers, castor oil polyglycidyl ether, triglycidyl isocyanurate (TGIC), and mixtures thereof.

**5.** Composition according to Claim 2 or 3, **characterized in that** the thermosetting resin is chosen from epoxidized olefin compounds which are linear, branched or cyclic comprising more than six members, in particular from epoxidized polyunsaturated fatty acids, epoxidized vegetable oils, epoxidized cycloaliphatic resins, glycidyl methacrylate, alkoxylated glycidyl (meth) acrylates; $C_8$-$C_{10}$ alkyl glycidyl ethers, $C_{12}$-$C_{14}$ alkyl glycidyl ethers, neodecanoic acid glycidyl ester, butyl glycidyl ether, cresyl glycidyl ether, phenyl glycidyl ether, p-nonylphenyl glycidyl ether, p-nonylphenyl glycidyl ether, p-t-butyl phenyl glycidyl ether, 2-ethylhexyl glycidyl ether, and mixtures thereof.

**6.** Composition according to Claim 2 or 3, **characterized in that** the thermosetting resin is chosen from: bisphenol A diglycidyl ether (DGEBA), tetraglycidyl methylene dianiline (TGMDA), bisphenol F diglycidyl ether, Novolac resins, trimethylol triglycidyl ether (TMPTGE), the diglycidyl ester of phthalic, isophthalic or terephthalic acid, tetrabromo

bisphenol A diglycidyl ether, 1,4-butanediol diglycidyl ether, triglycidyl isocyanurate (TGIC), poly(glycidyl methacrylate), and mixtures thereof.

**7.** Composition according to any one of Claims 2 to 6, **characterized in that** the thermosetting resin is chosen from bisphenol A diglycidyl ether (DGEBA), tetraglycidyl methylene dianiline (TGMDA), Novolac resins and glycidyl methacrylate.

**8.** Composition according to any one of Claims 2 to 7, **characterized in that** the content of thermosetting resin and of curing agent ranges from 10% to 90% by weight, in particular from 20% to 80% by weight or even from 30% to 70% by weight, relative to the total weight of the composition, the remainder to 100% being provided by the catalyst and optionally by additional compounds chosen from: polymers, pigments, dyes, fillers, plasticizers, long or short, woven or nonwoven fibers, flame retardants, antioxidants, lubricants, wood, glass, metals, and mixtures thereof.

**9.** Composition according to any one of Claims 2 to 8, **characterized in that** it also comprises at least one epoxide-opening additional catalyst, preferably chosen from tertiary amines such as 2,4,6-tri(dimethylaminomethyl)phenol, and imidazoles such as 2-methylimidazole.

**10.** Kit for producing a composition according to any one of Claims 2 to 9, comprising at least:

- a first composition comprising the catalyst, alone or with the curing agent or the thermosetting resin;
- optionally a second composition comprising the curing agent;
- optionally a third composition comprising the thermosetting resin.

**11.** Use of the composition according to any one of Claims 2 to 9, for producing an object made of thermoset resin that is hot-deformable.

**12.** Object comprising a thermoset resin obtained from a composition as defined in any one of Claims 2 to 9.

**13.** Process for deforming an object, such as an assembly, welding, repairing or recycling process, comprising the application, to an object in accordance with Claim 12, of a mechanical stress at a temperature (T) above the glass transition temperature Tg of the thermoset resin.

**14.** Use of one or more objects in accordance with Claim 12 in the motor vehicle, aeronautical, nautical, aerospace, sport, construction, electrical, electrical insulation, electronics, wind power, packaging and printing fields.

**15.** Use of the organometallic titanium complex according to Claim 1, as a vitrimer effect catalyst in systems based on an epoxy resin and on a curing agent of anhydride type.

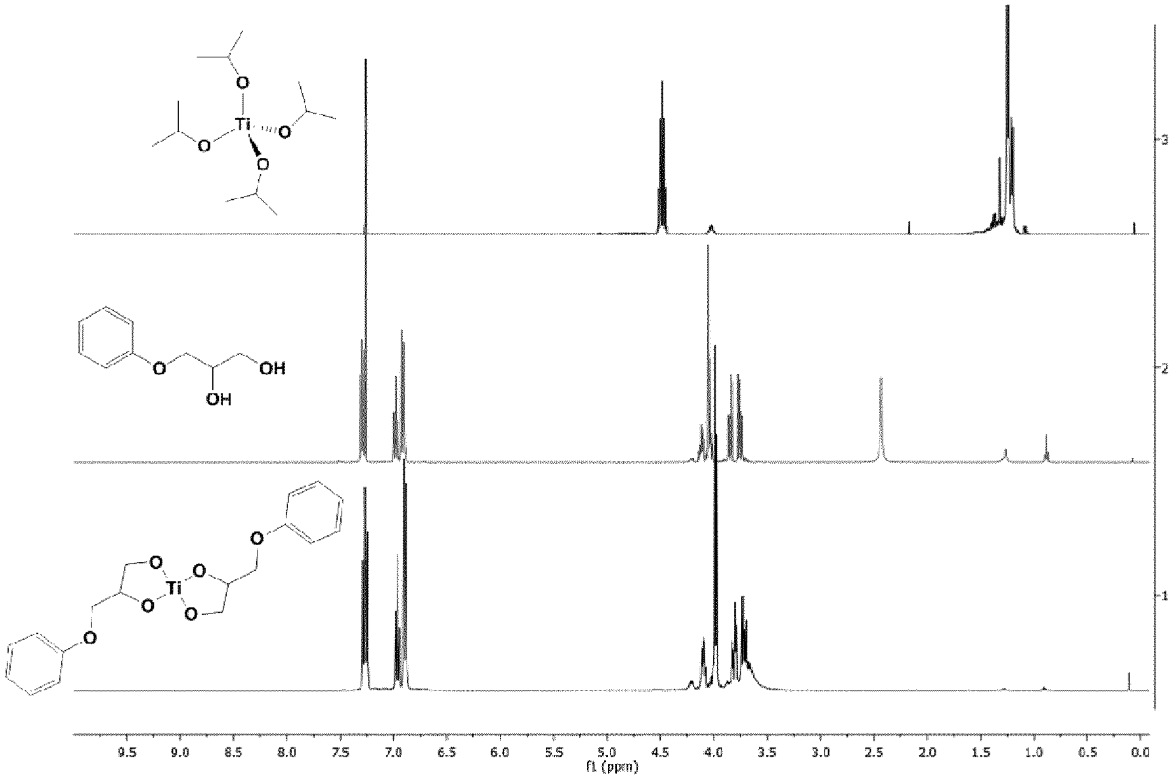


Figure 1

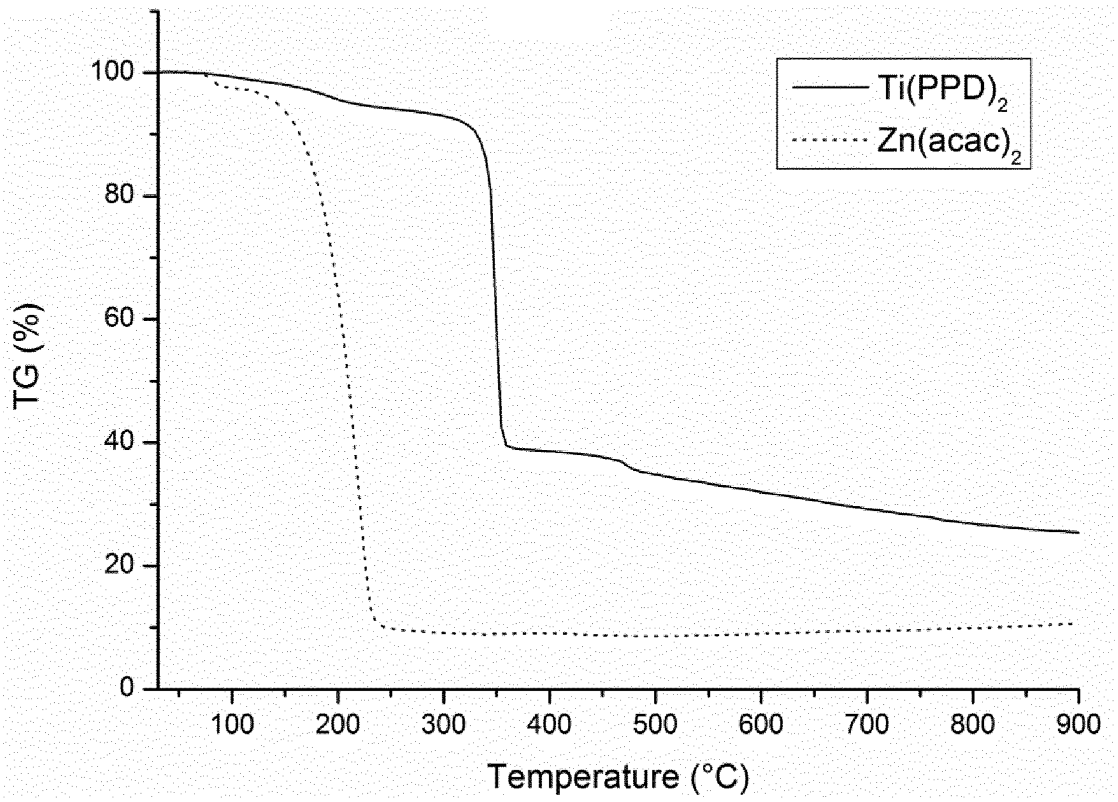


Figure 2

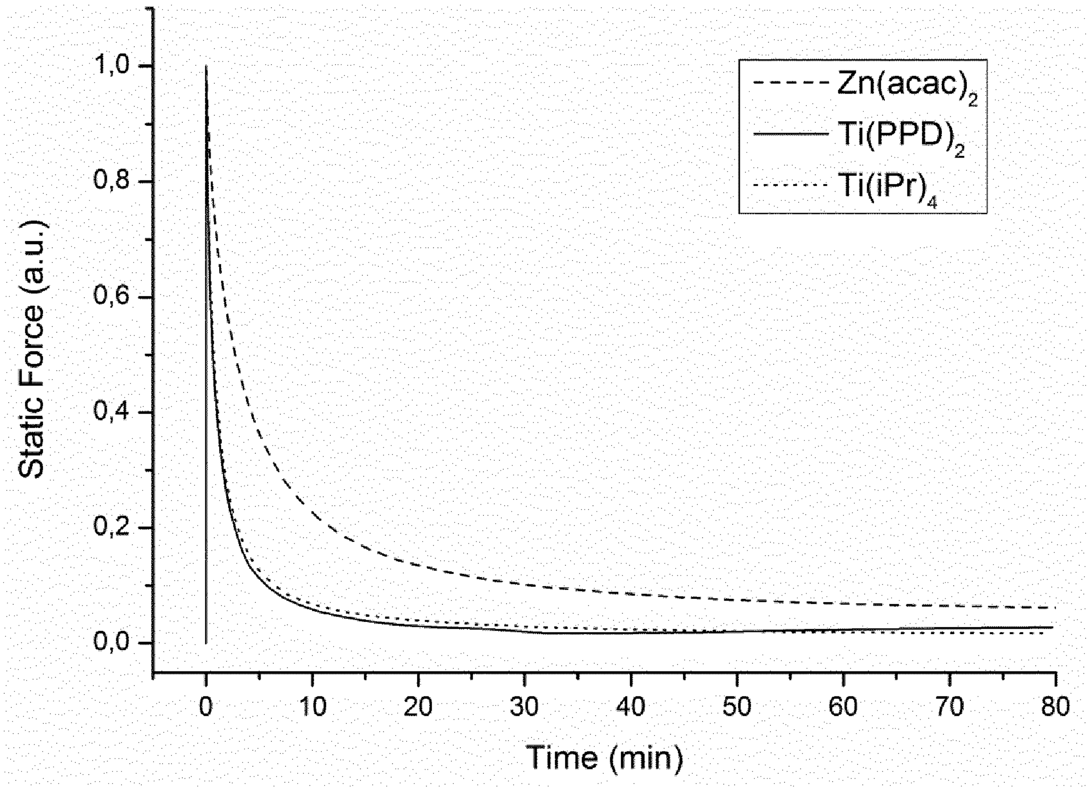


**Figure 3**

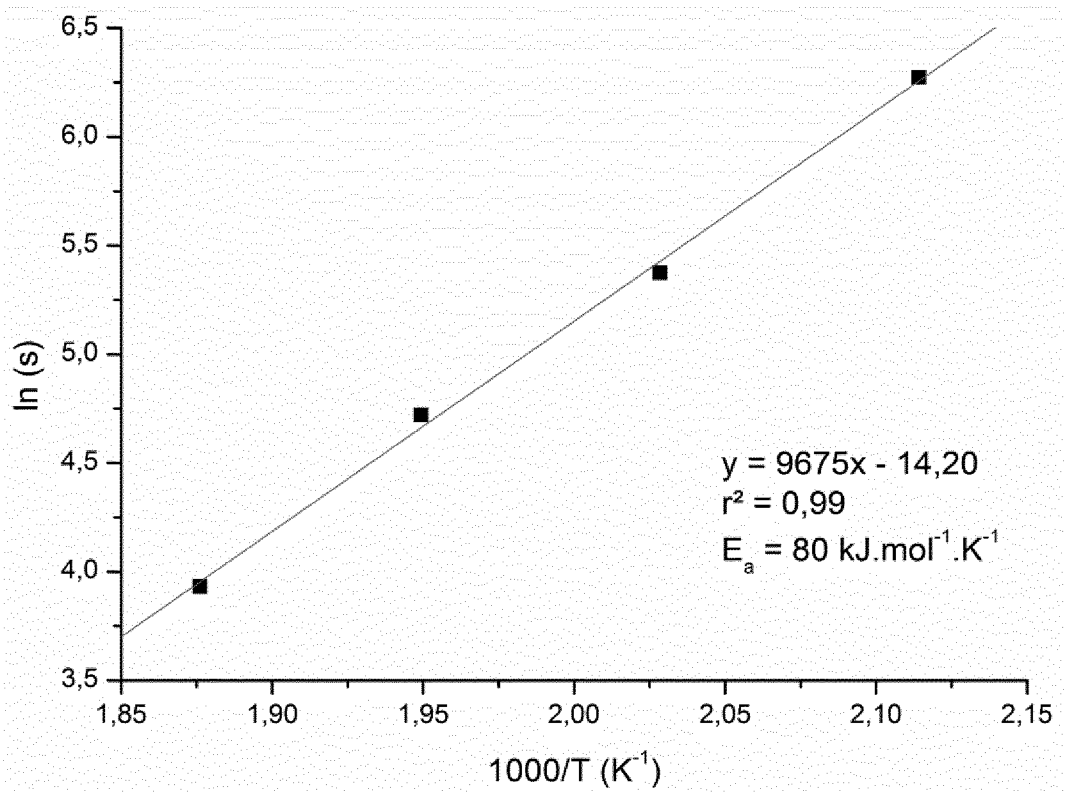


**Figure 4**

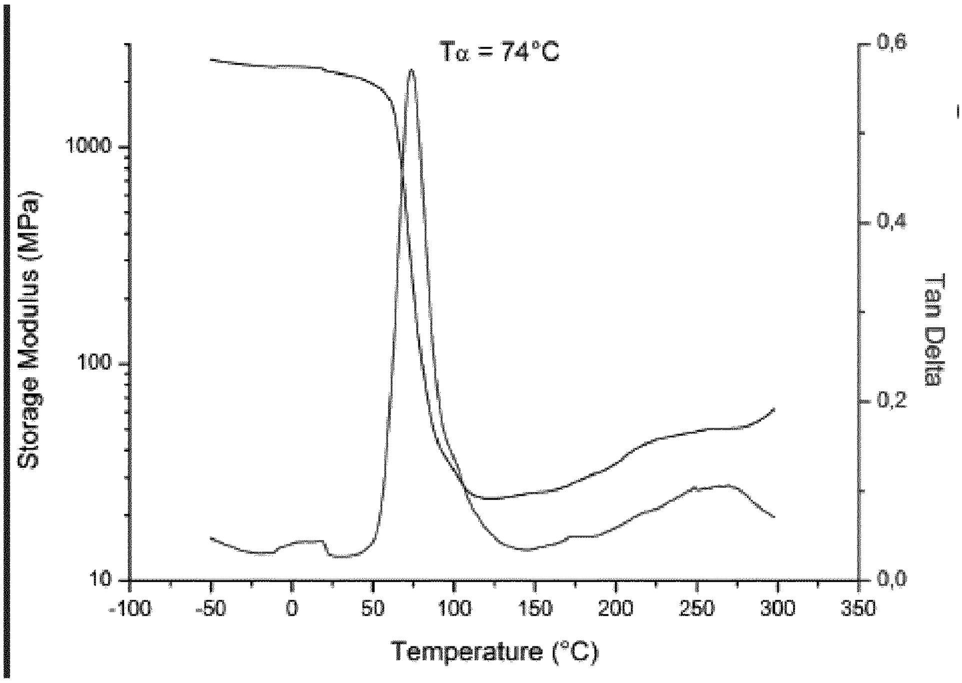
Tα = 74°C
Storage Modulus (MPa)
Tan Delta
Temperature (°C)
10
100
1000
0,0
0,2
0,4
0,6
-100
-50
0
50
100
150
200
250
300
350

Figure 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2012101078 A
- WO 2012152859 A
- FR 1419754
- GB 1069439 A
- FR 2584412
- WO 9723516 A
- WO 2011151584 A


### Littérature non-brevet citée dans la description


- **J.P. PASCAULT ; R.J.J. WILLIAMS.** Epoxy Polymer. Wiley-VCH, 2010
- **R. PERRIN ; J.P. SCHARFF.** *Chimie industrielle,* 1999